(19) Europäisches Patentamt
European Patent Office
Office européen des brevets

(11) EP 2 438 436 B1

(12) **EUROPEAN PATENT SPECIFICATION**

(45) Date of publication and mention
of the grant of the patent:
**15.11.2017 Bulletin 2017/46**

(51) Int Cl.:
***G01N 30/86*** (2006.01)

(21) Application number: **10726731.2**

(22) Date of filing: **25.05.2010**

(86) International application number:
**PCT/US2010/036090**

(87) International publication number:
**WO 2010/141272 (09.12.2010 Gazette 2010/49)**

(54) **METHODS OF AUTOMATED SPECTRAL PEAK DETECTION AND QUANTIFICATION WITHOUT USER INPUT**

VERFAHREN ZUR AUTOMATISCHEN SPEKTRALPEAK-ERKENNUNG UND -QUANTIFIZIERUNG OHNE BENUTZEREINGABE

PROCÉDÉS DE DÉTECTION ET DE QUANTIFICATION DE PIC SPECTRAL AUTOMATISÉES SANS ENTRÉE UTILISATEUR

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **01.06.2009 US 182953 P**

(43) Date of publication of application:
**11.04.2012 Bulletin 2012/15**

(73) Proprietor: **Thermo Finnigan LLC
San Jose, CA 95134 (US)**

(72) Inventor: **WRIGHT, David, A.
Livermore, CA 94550 (US)**

(74) Representative: **Boult Wade Tennant
Verulam Gardens
70 Gray's Inn Road
London WC1X 8BT (GB)**

(56) References cited:
**GB-A- 2 404 194    US-A- 5 592 402**

- **CARRILLO B ET AL: "Surface analysis of peptide mass spectra to improve time and mass localization" ANNUAL INTERNATIONAL CONFERENCE OF THE IEEE ENGINEERING IN MEDICINE AND BIOLOGY - PROCEEDINGS - CONFERENCE PROCEEDINGS - 26TH ANNUAL INTERNATIONAL CONFERENCE OF THE IEEE ENGINEERING IN MEDICINE AND BIOLOGY SOCIETY, EMBC 2004 2004 INSTITUTE OF ELECTRI, vol. 26 I, 2004, pages 220-223, XP002597545**
- **LEPTOS KYRIACOS C ET AL: "MapQuant: Open-source software for large-scale protein quantification" PROTEOMICS, vol. 6, no. 6, March 2006 (2006-03), pages 1770-1782, XP002597646 ISSN: 1615-9853**
- **MUNSELL B C ET AL: "Electrophoresis 2D Gel Residual Encoding Using Adaptive Wavelets for Image Segmentation" SOUTHEASTCON, 2005. PROCEEDINGS. IEEE FT. LAUDERDALE, FLORIDA, USA APRIL 8-10, 2005, PISCATAWAY, NJ, USA,IEEE LNKD- DOI:10.1109/SECON.2005.1423238, 8 April 2005 (2005-04-08), pages 163-168, XP010789719 ISBN: 978-0-7803-8865-9**
- **MATTHIAS BERTH ET AL: "The state of the art in the analysis of two-dimensional gel electrophoresis images" APPLIED MICROBIOLOGY AND BIOTECHNOLOGY, SPRINGER, BERLIN, DE LNKD- DOI:10.1007/S00253-007-1128-0, vol. 76, no. 6, 23 August 2007 (2007-08-23), pages 1223-1243, XP019538783 ISSN: 1432-0614**

EP 2 438 436 B1

Printed by Jouve, 75001 PARIS (FR)

**Description**

TECHNICAL FIELD

This invention relates to methods of analyzing data obtained from instrumental analysis techniques used in analytical chemistry and, in particular, to methods of automatically identifying peaks in liquid chromatograms, gas chromatograms, mass chromatograms or optical or other spectra without input from or intervention of a user.

BACKGROUND ART

The various techniques of instrumental analysis used in the broad field of analytical chemistry have been developed and refined primarily over the last century. Many of these techniques-such as the spectroscopic techniques including atomic absorption spectroscopy, atomic emission spectroscopy, UV-visible spectroscopy, infrared spectroscopy, NMR spectroscopy and Raman spectroscopy, among others-involve complex interactions of electromagnetic radiation with samples, possibly containing unknown substances to be identified or characterized. Other techniques, such as liquid chromatography (LC), gas chromatography (GC), mass spectrometry (MS) and the hybrid techniques of liquid chromatography-mass spectrometry (LC-MS or HPLC-MS), gas-chromatography-mass spectrometry (GC-MS) and others involve the detection and possibly identification or characterization of various substances derived from mixtures of substances, possibly including unknown analytes, as these substances are separated from one another in a chromatographic column.

One common feature of all the above-listed instrumental techniques is the capability, in use, of generating possibly complex graphs-the graphs generally referred to as spectra-of detected intensity versus some other controlled or measured physical quantity, such as time, frequency, wavelength or mass. In this document, the terms "spectroscopy" and "spectrum" are used in a fashion so as to include additional analytical chemical techniques and data that are not strictly concerned with measuring or representing analytical spectra in the electromagnetic realm. Such additional techniques and data include, but are not limited to, mass spectrometry, mass spectra, chromatography and chromatograms (including liquid chromatography, high-performance liquid chromatography and gas chromatography, either with or without coupling to mass spectrograph instrumentation).

Atomic spectroscopic techniques may produce, for each detected element, spectra consisting of multiple lines representing absorption or emission of electromagnetic energy by various electronic transitions of the atomized element. Likewise, molecular spectroscopic techniques may produce spectra of multiple lines or complexly shaped bands representing absorption or emission of electromagnetic energy by various transitions of molecules among or between various excited and/or ground energy states, such energy states possibly being electronic, vibrational or rotational, depending upon the technique employed.

Still further, mass spectrometry techniques may produce complex spectra consisting of several detected peaks, each such peak representing detection of an ion of a particular mass unit. In mass analysis mode, several peaks, of different $m/z$ values (where $m$ represents mass and $z$ represents charge), may be produced as for each ionized species, as a result of both isotopic variation and differing charges. In the various chromatographic techniques, including those techniques (for instance, GC-MS or LC-MS) in which eluting substances are detected by MS as well as those techniques in which detection is by optical spectroscopy, various possibly overlapping peaks of Gaussian or other skewed shapes may be produced as a function of time as the various substances are eluted.

Traditionally, analytical spectroscopy instrumentation has found its greatest use in specialized research or clinical laboratories in which instrument operation and data analysis is performed by personnel who are highly trained and or experienced in the operation and data collection of the particular employed instruments. However, as the use of analytical spectroscopy instrumentation has expanded, in recent years, from specialized research laboratory environments to general industrial, clinical or even public environments for, for instance, high-throughput screening, there has emerged a need to make instrument operation and data collection and interpretation accessible to less highly trained or experienced users. Thus, there is a need for instrument firmware and software to fulfill greater roles in instrument control and data collection, analysis and presentation so as to render overall turnkey high-throughput operation, with minimal user input or intervention.

Historically, in traditional instrumental analysis situations, collected data is analyzed offline with the aid of specialized software. A first step in conventional data analysis procedures is peak picking, so as to identify and quantify spectral peaks. Such chromatographic or spectroscopic peak detection is one of the most important functions performed by any data analysis system. Typically, chromatographic or spectroscopic peak detection software has employed various user-settable parameters, allowing the operator to provide input in the form of initial guesses for peak locations and intensities and subsequently, to "optimize" the results, after execution of some form of fitting routine that employs the operator's guesses as a starting point. Existing methods of peak detection have many adjustable parameters, requiring operator skill and patience in arriving at an acceptable result. Novice or untrained operators will very likely get an incorrect result or no result at all. This typically results in a very time-consuming process, and the "tweaking" by or inexperience of the user often results in data that is not reproducible and suspect. Further, such traditional forms of peak identification are not suitable for high-throughput industrial process monitoring or clinical or other chemical screening operations, in which there may be a requirement to analyze many hundreds or even thousands of samples per day.

Another critical feature in peak detection is integration of the peak area. With regards to many spectra, the area under a resolved peak is proportional to the number of molecules of a particular analyte. Therefore, assessment of the relative abundances of analytes in a sample requires accurate, robust algorithms for peak integration. Prior attempts at providing automated methods (that is, without input of peak parameters by a user or operator) of peak area calculation generally employ algorithms that calculate the area under the graph of the raw spectral data (e.g., by the trapezoidal method of numerical integration) and, as such, may have multiple or inconsistent criteria to determine how far to extend the numerical integration along the flanks of peaks. Also, such prior numerical integration methods handle overlapped peaks poorly, if at all.

From the foregoing discussion, there is a need in the art for reproducible methods of automated detection, location and area calculation of peaks that do not require initial parameter input or other intervention by a user or operator. The present invention addresses such a need.

CARRILLO B ET AL., "Surface analysis of peptide mass spectra to improve time and mass localization", ANNUAL INTERNATIONAL CONFERENCE OF THE IEEE ENGINEERING IN MEDICINE AND BIOLOGY - PROCEEDINGS - CONFERENCE PROCEEDINGS - 26th Annual International Conference of the IEEE Engineering in Medicine and Biology Society, EMBC 2004 Institute of Electrical and Electronic Engineers., Volume 26 I, 2004, pages 220-223, describes a technique for the automatic identification and characterization of spectral peaks in a spectrum of a chromatography/ mass spectrometry apparatus, in accordance with the precharacterising portion of claim 1. It also shows an apparatus in accordance with the precharacterising portion of claim 6.

DISCLOSURE OF INVENTION

Embodiments in accordance with the present invention may address the above-noted needs in the art by providing methods and computer program products for identifying peaks in spectral data that do not require parameter input or intervention by users or instrument operators. Methods in accordance with the present invention do not make *a priori* assumptions about the particular line shape of the chromatographic or spectroscopic peak(s) and may fit any individual peak to either a Gaussian, exponentially modified Gaussian, Gamma distribution or other form of shape. By not exposing any adjustable parameters to users, methods in accordance with the invention avoid the problems discussed above, and lend themselves to automated analysis. Further, methods in accordance with the invention avoid all the aforementioned problems associated with peak area integration in prior art automated analyses, since the peak area is known from the peak fitting parameters. The present methods may add together multiple Gaussian shapes to yield a final (complex) peak shape or can cleanly separate overlapping peaks that come from different components. Thus, overlapped peaks are easily handled and the integrals computed from the Gaussian (or other) widths and intensities.

According to a first aspect of the present invention, there is provided a method of automatically identifying and characterizing spectral peaks of a spectrum generated by a chromatography / mass spectrometry apparatus, as set out in claim 1.

In embodiments, baseline model curve parameters are neither input by nor exposed to the user prior to the reporting step. In embodiments, peak model curve parameters are neither input by nor exposed to the user prior to the reporting step. Some embodiments may include automatically determining, for at least one chromatographic peak, a peak model curve that provides the best fit to said at least one chromatographic peak from among the group consisting of Gaussian distributions, Gamma distributions and exponentially modified Gaussian distributions. Further, various embodiments may include a step of reporting to a user or recording to electronic data storage a width, an intensity or a skew of a spectral peak; dividing a baseline-corrected spectrum portion into quadrants or the additional steps of receiving another portion of the spectrum, said other spectrum portion generated by the chromatography / mass spectrometry apparatus concurrently with the processing of a first portion; and, then, performing processing steps in conjunction with the other spectrum portion.

According to another aspect of the present invention, there is a provided an apparatus as set out in claim 6,

BRIEF DESCRIPTION OF DRAWINGS

The above noted and various other aspects of the present invention will become apparent from the following description which is given by way of example only and with reference to the accompanying drawings, not drawn to scale, in which:

FIG. 1 is a flowchart of a method for automated spectral peak detection and quantification in accordance with an embodiment of the invention;

FIG. 2 is a flowchart of a method for automatically removing baseline features and estimating background noise from spectral data in accordance with an embodiment of the invention;

FIG. 3 is a graph of an example of the variation of the calculated area underneath a baseline-corrected spectral curve as a function of the order of polynomial used in fitting the baseline to a polynomial function;

FIG. 4 is an example of a preliminary baseline corrected spectral curve prior to fitting the end regions to exponential functions and an example of the baseline comprising exponential fit functions;

FIG. 5 is a flowchart of a method for automated spectral peak detection and quantification in accordance with an embodiment of the invention;

FIG. 6 a graph of a hypothetical skewed spectral peak depicting a method in accordance with the invention for obtaining three points on the spectral peak to be used in an initial estimate of skew and for preliminary peak fitting;

FIG. 7A a graph of a set of gamma distribution functions having different values of shape parameter M, illustrating a fashion by such functions may be used to synthetically fit skewed spectral peaks;

FIG. 7B is a schematic illustration of a theoretical model of movement of a molecule in a chromatographic column during mass chromatography showing alternations between mobile and stationary phases wherein random desorption from the stationary phase is governed by a homogeneous rate constant;

FIG. 8 is a flowchart illustrating a method for choosing between line shapes used for fitting.

FIG. 9A is a flowchart illustrating steps for estimating coordinates of points at a peak maximum and along flanks of the peak at half-height, according to a method of the present invention; and

FIG. 9B is a flowchart illustrating alternative steps for estimating coordinates of points at a peak maximum and along flanks of the peak at half-height, according to a method of the present invention.

FIG. 10 is a perspective view of a three-dimensional graph of chromatography-mass spectrometry data, in which the variables are time, mass (or mass-to-charge ratio, $m/z$) and ion abundance.

FIG. 11A is a contour plot representation of the data plotted in FIG. 10, illustrating initial division of the space of the independent variables into four quadrants, in accordance with some embodiments of methods of the invention.

FIG. 11B is a peak location plot of the data plotted in FIG. 10 and FIG. 11A, showing a second round of division of the space of the independent variables, in which each of the initial four quadrants is further subdivided into four sub-quadrants, in accordance with some embodiments of methods of the invention.

FIG. 11C is a peak location plot of the data plotted in FIGS. 10, 11A and 11B, showing further division of some sub-quadrants and elimination from further consideration of sub-quadrants containing no peaks, in accordance with some embodiments of methods of the invention.

FIG. 11D is a peak location plot of a portion of the data region of FIG. 11C showing still further division of some sub-quadrants and elimination from further consideration of sub-quadrants containing no peaks, in accordance with some embodiments of methods of the invention..

FIG. 12 is an example of projected data that eliminates one data variable from consideration during initial data analysis stages.

FIG. 13A is a peak location plot representation of the data plotted in FIG. 10, illustrating initial division of the space of the independent variables into two halves, according to $m/z$, in accordance with some embodiments of methods of the invention.

FIG. 13B is a peak location plot of the data plotted in FIG. 10 and FIG. 13A, showing a second round of division of the space of the independent variables, in which each of the initial halved is further subdivided into two sub-regions, according to *m/z*, in accordance with some embodiments of methods of the invention.

FIG. 13C is a peak location plot of the data plotted in FIGS. 10, 13A and 13B, showing further division of some sub-regions and elimination from further consideration of sub-regions containing no peaks, in accordance with some embodiments of methods of the invention.

FIG. 14 is a flowchart which outlines the general steps in some methods for automatically analyzing a chromatography / mass spectrometry spectrum in accordance with the invention.

FIG. 15 is a flowchart of steps of some methods which are not in accordance with the invention for automatically determining if at least one spectral peak occurs and the locations of any peaks in a chromatography / mass spectrometry spectrum.

FIG. 16 is a flowchart of steps of some alternative methods in accordance with the invention for automatically determining if at least one spectral peak occurs and the locations of any peaks in a chromatography / mass spectrometry spectrum.

FIG. 17 is a schematic diagram of a system for generating and automatically analyzing chromatography / mass spectrometry spectra in accordance with the invention.

MODES FOR CARRYING OUT THE INVENTION

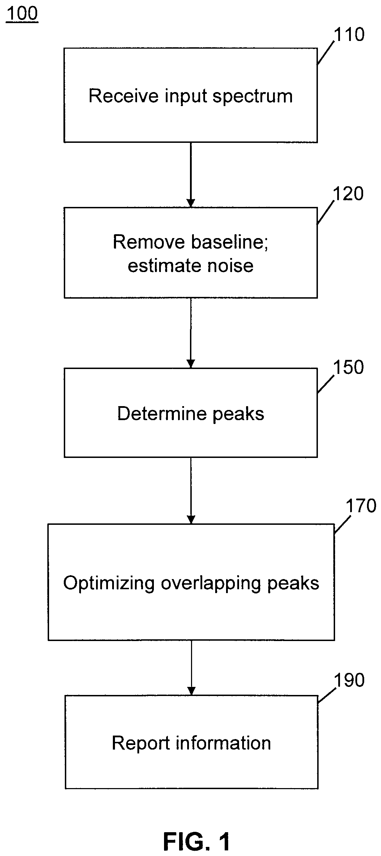

The present invention provides methods of automated spectral peak detection and quantification that do not require any user input or intervention. The methods described herein can accommodate and model all types of spectral data, where the term "spectral data" is broadly defined as described above, and provide robust automatic detection, integration and reporting of spectral peaks. Any and even all model parameters utilized in these methods may be adaptively determined in a manner that is invisible to the user. The following description is presented to enable any person skilled in the art to make and use the invention, and is provided in the context of a particular application and its requirements. Various modifications to the described embodiments will be readily apparent to those skilled in the art and the generic principles herein may be applied to other embodiments. Thus, the present invention is not intended to be limited to the embodiments and examples shown but is to be accorded the widest possible scope in accordance with the features and principles shown and described. The particular features and advantages of the invention will become more apparent with reference to the appended FIGS. 1-12, taken in conjunction with the following description.

In embodiments of methods in accordance with the instant invention, the various steps may be grouped into an input step, three basic stages of data processing, each stage possibly comprising several steps, and a reporting step as outlined in the method **100** as illustrated in FIG. 1. The first step **110** in the method **100** is the reception of an input spectrum directly from an analytical chemical device or, alternatively, from a data file comprising data previously collected from an analytical chemical device. The "spectrum" may, in fact, comprise a chromatogram, such as those produced by liquid or gas chromatography, in which the abscissa represents time (for instance, retention time) and the ordinate represents intensity of detection of analytes or other chemicals by a detector. Alternatively, the spectrum may comprise a mass chromatogram in which a unit of ionic mass is plotted along the abscissa and intensity of detection of ions is plotted along the ordinate. The spectrum may also be any form of recordable spectrum comprising intensity of detected electromagnetic radiation either emitted, scattered or absorbed by a material (or any quantity derivable from such processes) plotted as a function of electromagnetic wavelength or frequency.

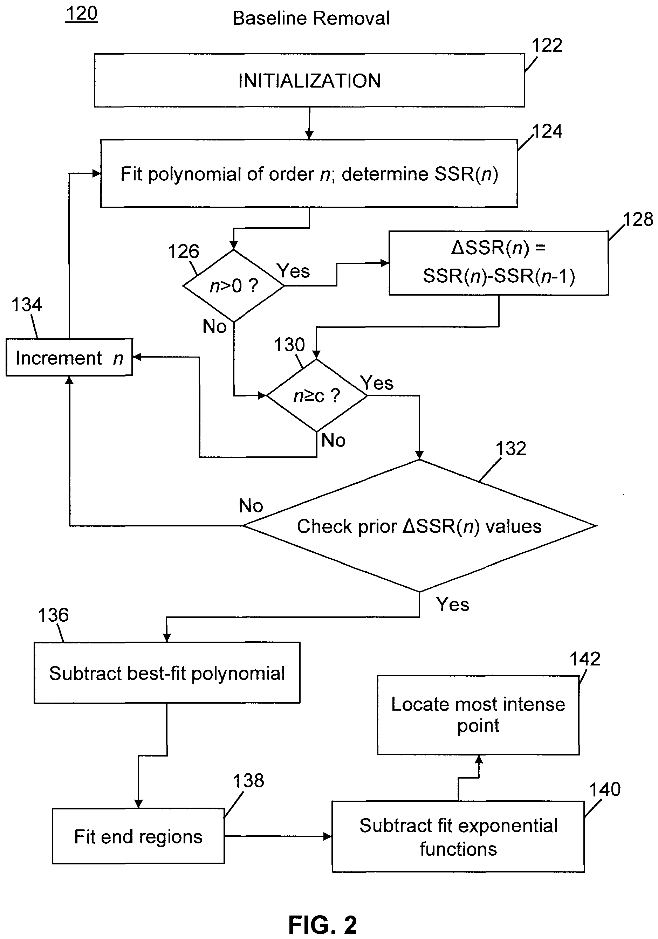

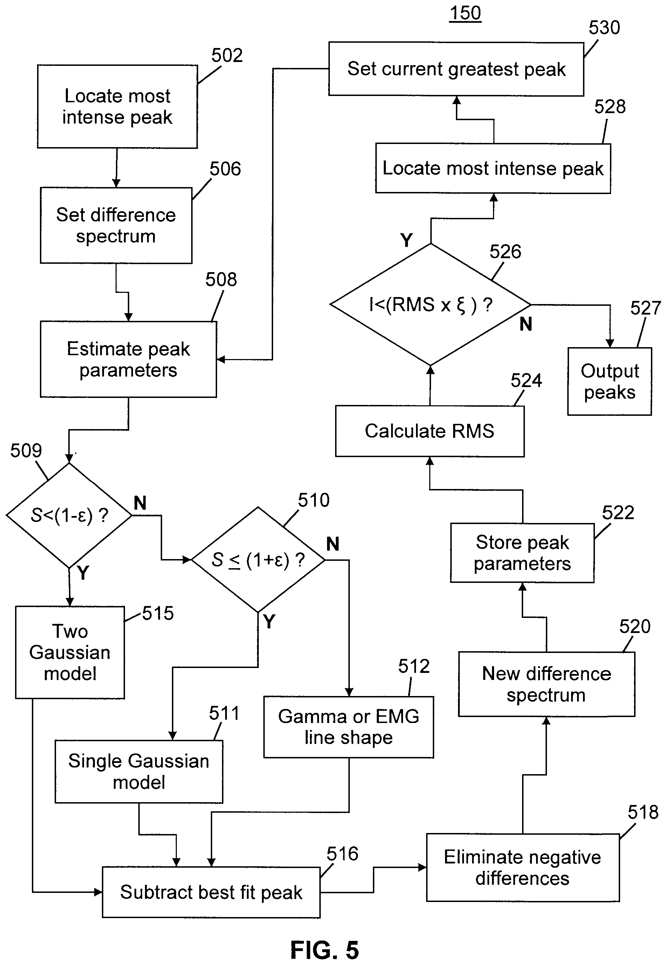

The next step, step **120**, of the method **100** is a preprocessing stage in which baseline features may be removed from the received spectrum and in which a level of random "noise" of the spectrum may be estimated, this step being described in greater detail in subsequent FIG. 2. The next step **150**, which is described in greater detail in subsequent FIG. 5, is the generation of an initial estimate of the parameters of synthetic peaks, each of which models a positive spectral feature of the baseline corrected spectrum. Such parameters may relate, for instance, to peak center, width, skew and area of modeled peaks, either in preliminary or intermediate form. The subsequent optional step **170** includes refinement of fit parameters of synthetic peaks determined in the preceding step **150** in order to improve the fit of the peaks, taken as a set, to the baseline corrected spectrum. The need for such refinement may depend on the degree of complexity or accuracy employed in the execution of modeling in step **150**.

Finally, in step **190**, the parameters of the final model peaks are reported to a user. The reporting may be performed in numerous alternative ways-for instance via a visual display terminal, a paper printout, or, indirectly, by outputting the parameter information to a database on a storage medium for later retrieval by a user. The reporting step may include reporting either textual or graphical information, or both. This reporting step **190** may include the additional actions of comparing peak parameters (for instance, peak position) to a database and reporting, to a user, the identities of analytes that correspond to one or more peaks. Some methods of the invention may further include, in step **190**, the action of extracting, from the model spectral parameters, information related to or inferred to be related to the physical functioning or operational state or an operational parameter of an analytical instrument that provided the spectral data and reporting such instrument-related information to a user.

The term "model" and its derivatives, as used herein, may refer to either statistically finding a best fit synthetic peak or, alternatively, to calculating a synthetic peak that exactly passes through a limited number of given points. The term "fit" and its derivatives refer to statistical fitting so as to find a best-fit (possibly within certain restrictions) synthetic peak such as is commonly done by least squares analysis. Note that the method of least squares (minimizing the chi-squared metric) is the maximum likelihood solution for additive white Gaussian noise. In other situations (e.g., photon-counting), it might be appropriate to minimize a different error metric, as directed by the maximum likelihood criterion. More detailed discussion of individual method steps and alternative methods is provided in the following discussion and associated figures.

Baseline Detection

A feature of a first, pre-processing stage of the new methods of peak detection takes note of the concept that (disregarding, for the moment, any chemical or electronic noise) a spectroscopic signal (such as, for instance, a chromatogram which is a signal obtained versus time) consists of signal plus baseline. If one can subtract the baseline correctly, everything that remains must be signal, and should be fitted to some sort of data peak.

Therefore, embodiments in accordance with the present invention may start by determining the correct baseline. Steps in the methods may apply a polynomial curve as the baseline curve, and measure the residual (the difference between the chromatographic data and the computed baseline) as a function of polynomial order. For instance, FIG. 2 illustrates a flowchart of a method **120** for automatically removing baseline features from spectral data in accordance with some embodiments of the invention. The method **120** illustrated in FIG. 2 repeatedly fits a polynomial function to the baseline, subtracts the best fit polynomial function from the spectrum so as to provide a current baseline-corrected spectrum, evaluates the quality of the fit, as measured by a sum of squared residuals (SSR), and proceeds until SSR changes, from iteration to iteration, by less than some pre-defined percentage of its original value for a pre-defined number of iterations.

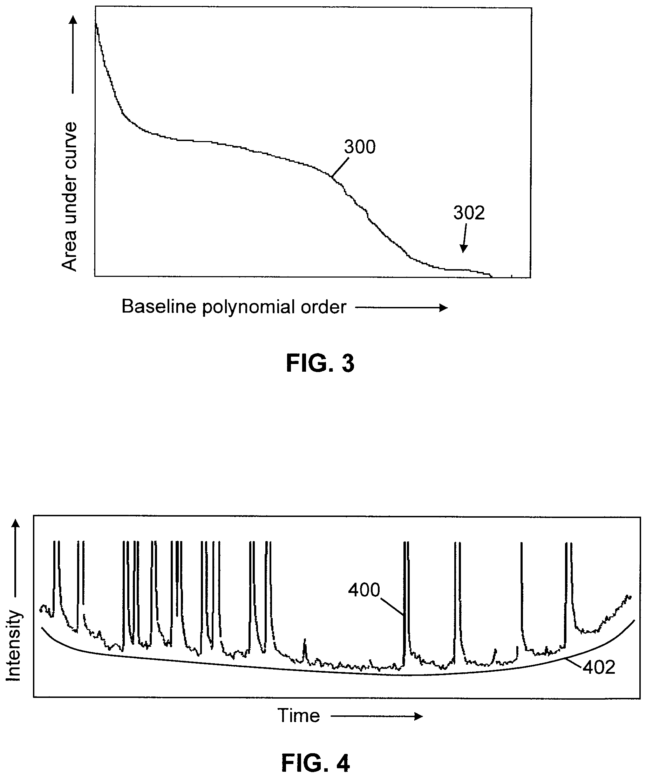

FIG. 3 is an exemplary graph **300** of the variation of the calculated area underneath a baseline-corrected spectral curve as a function of increasing order of the polynomial used in fitting the baseline. FIG. 3 shows that the area initially decreases rapidly as the order of the best fit polynomial increases. This function will go from some positive value at order zero, to a value of zero at some high polynomial order. However, as may be observed from FIG. 3, after most of the baseline curvature has been fit, the area function attains a plateau region **302** for which the change in the function between polynomial orders is some relatively small amount (for instance 5% of its initial value). At this point, the polynomial-fitting portion of the baseline determination routine may be terminated.

To locate the plateau region **302** as indicated in FIG. 3, methods according to the present invention may repeatedly compute the sum of squared residuals (SSR) for sequential values of polynomial order, each time computing the difference of the SSR ($\Delta$SSR) determined between consecutive polynomial orders. This process is continued until a region is found in which the change ($\Delta$SSR) is less than the pre-defined percentage (for instance, 5%) of a certain reference value determined from the spectrum for a certain number c (for instance, four) of sequential iterations. The reference value may comprise, for instance, the maximum intensity of the original raw spectrum. Alternatively, the reference value may comprise the sum of squared values ($SSV_0$) of the original raw spectrum or some other quantity calculated from the spectral values.

Once it is found that $\Delta$SSR less than the pre-defined percentage of the reference value for c iterations, then one of the most recent polynomial orders (for instance, the lowest order of the previous four) is chosen as the correct polynomial order. The subtraction of the polynomial with the chosen order yields a preliminary baseline corrected spectrum, which may perhaps be subsequently finalized by subtracting exponential functions that are fit to the end regions.

Returning, now, to the discussion of method **120** shown in FIG, 2, it is noted that the first step **122** comprises loop initialization step of setting the order, n, of the baseline fitting polynomial to an initial value of zero and determining a reference value to be used, in a later step **132**, for determining when the fitting polynomial provides an adequate fit to the baseline. The reference value may simply be the maximum intensity of the raw spectrum. Alternatively, the reference value may be some other measure determined from the spectrum, such as the sum of the squared values (SSV) of the spectrum.

From step **122**, the method **120** proceeds to a step **124**, which is the first step in a loop. The step **124** comprises fitting a polynomial of the current order (that is, determining the best fit polynomial of the current order) to the raw spectrum by the well-known technique of minimization of a sum of squared residuals (SSR). The SSR as a function of $n$, SSR($n$) is stored at each iteration for comparison with the results of other iterations.

From step **124**, the method **120** proceeds to a decision step **126** in which, if the current polynomial order $n$ is greater than zero, then execution of the method is directed to step **128** in order to calculate and store the difference of SSR, $\Delta$SSR($n$), relative to its value in the iteration just prior. In other words, $\Delta$SSR($n$)=SSR($n$)-SSR($n$-1). The value of $\Delta$SSR($n$) may be taken a measure of the improvement in baseline fit as the order of the baseline fitting polynomial is incremented to $n$.

The iterative loop defined by all steps from step **124** through step **132**, inclusive, proceeds until SSR changes, from iteration to iteration, by less than some pre-defined percentage, $t$%, of the reference value for a pre-defined integer number, $c$, of consecutive iterations. Thus, the number of completed iterations, integer $n$, is compared to $c$ in step **130**. If $n \geq c$, then the method branches to step **132**, in which the last $c$ values of $\Delta$SSR($n$) are compared to the reference value. However, in the alternative situation ($n<c$), there are necessarily fewer than $c$ recorded values of $\Delta$SSR($n$), and step **132** is bypassed, with execution being directed to step **134**, in which the integer $n$ is incremented by one.

The sequence of steps from step **124** up to step **132** (going through step **128**, as appropriate) is repeated until it is determined, in step **132**, that the there have been $c$ consecutive iterations in which the SSR value has changed by less than $t$% of the reference value. At this point, the polynomial portion of baseline correction is completed and the method branches to step **136**, in which the final polynomial order is set and a polynomial of such order is subtracted from the raw spectrum to yield a preliminary baseline-corrected spectrum.

The polynomial baseline correction is referred to as "preliminary" since, as the inventors have observed, edge effects may cause the polynomial baseline fit to be inadequate at the ends of the data, even though the central region of the data may be well fit. FIG. 4 shows an example of such a preliminary baseline corrected spectrum **400**. The residual baseline curvature within the end regions (for instance, the leftmost and rightmost 20% of the spectrum) of the spectrum **400** are well fit by a sum of exponential functions (one for each end region), the sum of which is shown in FIG. 4 as curve **402**. Either a normal or an inverted (negated) exponential function may be employed, depending on whether the data deviates from zero in the positive or negative direction. This correction may be attempted at one or both ends of the spectrum. Thus, the method **120** proceeds to step **138** which comprises least squares fitting of the end region baselines to exponential functions, and then to step **140** which comprises subtraction of these functions from the preliminary baseline-corrected spectrum to yield the final baseline corrected spectrum. These steps yield a final baseline-corrected spectrum. In step **142**, the most intense point in the final baseline spectrum is located.

Peak Detection

At this point, after the application of the steps outlined above, the baseline is fully removed from the data and the features that remain within the spectrum above the noise level may be assumed to be analyte signals. The methods described in FIG. 5 locate the most intense region of the data, fit it to one of several peak shapes, remove that theoretical peak shape from the experimental data, and then continue to repeat this process until there are no remaining data peaks with a signal-to-noise ratio (SNR) greater than some predetermined value, s, greater than or equal to unity. The steps of this process are illustrated in detail in FIG. 5 and also shown in FIG. 1. The pre-defined value, s, may be chosen so as to limit the number of false positive peaks. For instance, if the RMS level of Rayleigh-distributed noise is sigma, then a peak detection threshold, s, of 3 sigma leads to a false detection rate of about 1%.

The method **150**, as shown in FIG. 5 is an iterative process comprising initialization steps **502** and **506**, loop steps **508-530** (including loop exit decision step **526**) and final reporting step **527**. A new respective peak is located and modeled during each iteration of the loop defined by the sequence of steps **508-530**.

The first step **502** of method **150** comprises locating the most intense peak in the final baseline-corrected spectrum and setting a program variable, current greatest peak, to the peak so located. In this discussion, the terms "peak" or "spectrum" are used to refer to curves (that is, either an array of $x,y$ Cartesian coordinate pairs or, in reference to a synthetic peak, possibly a function $y$=f($x$)) that may be considered as sub-spectra (and which may be an entire spectrum) and which may be defined on a certain subset (which may be the full set) of the available range of $x$-axis data. The variable x may represent time, wavelength, etc. and $y$ generally, but not necessarily, represents intensity. Accordingly, it is to be kept in mind that, as used in this discussion, the acts of locating a peak or spectrum, setting or defining a peak or spectrum, performing algebraic operations on a peak or spectrum, etc. implicitly involve either point-wise operations on sets of points or involve operations on functional representations of sets of points. Thus, for instance, the operation of locating the most intense peak in step **502** involves locating all points in the vicinity of the most intense point that are above a presumed noise level, under the proviso that the total number of points defining a peak must be greater than or equal to four. Also, the operation of "setting" a program variable, current greatest peak, comprises storing the data of the most intense peak as an array of data points.

From step **502**, the method **150** proceeds to second initialization step **506** in which another program variable, "difference spectrum" is set to be equal to the final baseline-corrected spectrum (see step **140** of method **120**, FIG. 2). The difference spectrum is a program variable that is updated during each iteration of the loop steps in method **150** so as to keep track of the spectrum resulting from subtraction of all prior-fitted peaks from the final baseline-corrected spectrum. As discussed later in this document, the difference spectrum is used to determine when the loop is exited under the assumption that, once all peaks have been located and modeled, the difference spectrum will consist only of "noise".

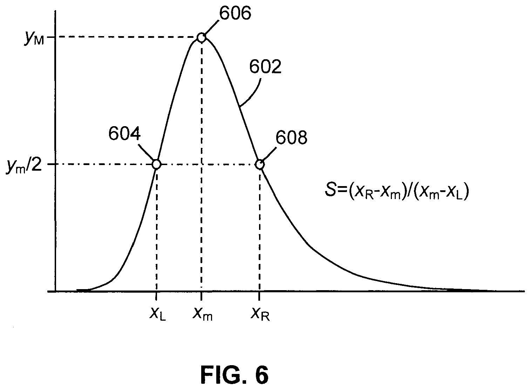

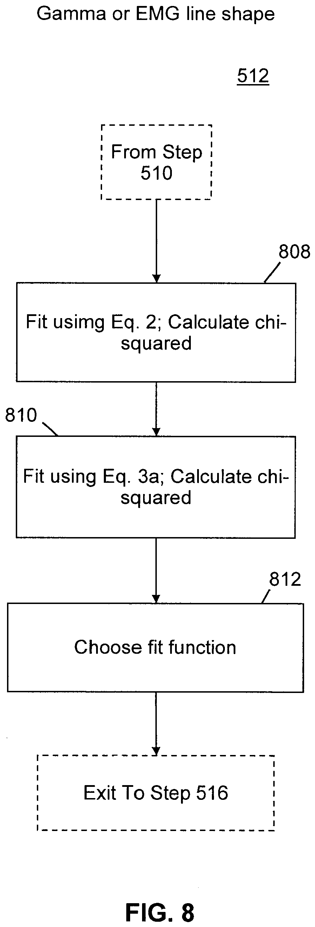

Subsequently, the method **150** enters a loop at step **508**, in which initial estimates are made of the coordinates of the peak maximum point and of the left and right half-height points for the current greatest peak and in which peak skew, S is calculated. The method of estimating these co-ordinates is schematically illustrated in FIG. 6 and is discussed in greater detail later with respect to FIGS. 8A-8B. Letting curve **602** of FIG. 6 represent the current greatest peak, then the co-ordinates of the peak maximum point **606**, left half-height point **606** and right half-height point **608** are, respectively, $(x_m, y_m)$, $(x_L, y_m/2)$ and $(x_R, y_m/2)$. The peak skew, S, is then defined as: $S=(x_R-x_m)/(x_m-x_L)$.

In steps **509** and **510**, the peak skew, S, may be used to determine a particular form (or shape) of synthetic curve (in particular, a distribution function) that will be subsequently used to model the current greatest peak. Thus, in step **509**, if $S < (1-\varepsilon)$, where $\varepsilon$ is some pre-defined positive number, such as, for instance, $\varepsilon =0.05$, then the method **150** branches to step **515** in which the current greatest peak is modeled as a sum of two Gaussian distribution functions (in other words, two Gaussian lines). Otherwise, in step **510**, if $S \leq (1+\varepsilon)$, then the method **150** branches to step **511** in which a (single) Gaussian distribution function is used as the model peak form with regard to the current greatest peak. Otherwise, the method **150** branches to step **512**, in which either a gamma distribution function or an exponentially modified Gaussian (EMG) or some other form of distribution function is used as the model peak form. A non-linear optimization method such as the Marquardt-Levenberg Algorithm (MLA) or, alternatively, the Newton-Raphson algorithm may be used to determine the best fit using any particular line shape. After either step **511**, step **512** or step **515**, the synthetic peak resulting from the modeling of the current greatest peak is removed from the spectral data (that is, subtracted from the current version of the "difference spectrum") so as to yield a "trial difference spectrum" in step **516**. Additional details of the gamma and EMG distribution functions and a method of choosing between them are discussed in greater detail, partially with reference to FIG. 8, later in this document.

Occasionally, the synthetic curve representing the statistical overall best-fit to a given spectral peak will lie above the actual peak data within certain regions of the peak. Subtraction of the synthetic best fit curve from the data will then necessarily introduce a "negative" peak artifact into the difference spectrum at those regions. Such artifacts result purely from the statistical nature of the fitting process and, once introduced into the difference spectrum, can never be subtracted by removing further positive peaks. However, physical constraints generally require that all peaks should be positive features. Therefore, an optional adjustment step is provided as step **518** in which the synthetic peak parameters are adjusted so as to minimize or eliminate such artifacts.

In step **518** (FIG. 5), the solution space may be explored for other fitted peaks that have comparable squared differences but result in residual positive data. A solution of this type is selected over a solution that gives negative residual data. Specifically, the solution space may be incrementally walked so as to systematically adjust and constrain the width of the synthetic peak at each of a set of values between 50% and 150% of the width determined in the original unconstrained least squares fit. After each such incremental change in width, the width is constrained at the new value and a new least squared fit is executed under the width constraint. The positive residual (the average difference between the current difference spectrum and the synthetic peak function) and chi-squared are calculated and temporarily stored during or after each such constrained fit. As long as chi-squared doesn't grow beyond a certain multiple of its initial value, for instance 3-times its initial value, the search continues until the positive residual decreases to below a certain limit, or until the limit of peak width variation is reached. This procedure results in an adjusted synthetic fit peak which, in step **520**, is subtracted from the prior version of the difference spectrum so as to yield a new version of the difference spectrum (essentially, with the peak removed). In step **522**, information about the most recently adjusted synthetic peak, such as parameters related to peak form, center, width, shape, skew, height and/or area are stored.

In step **524**, the root-of-the-mean squared values (root-mean-square or RMS) of the difference spectrum is calculated. The ratio of this RMS value to the intensity of the most recently synthesized peak may be taken as a measure of the signal-to-noise (SNR) ratio of any possibly remaining peaks. As peaks continue to be removed (that is, as synthetic fit peaks are subtracted in each iteration of the loop), the RMS value of the difference spectrum approaches the RMS value of the noise. As each tentative peak is found, its maximum intensity, $I$, is compared to the current RMS value, and if $I < (RMS \times \xi)$ where $\xi$ is a certain pre-defined noise threshold value, greater than or equal to unity, then further peak detection is terminated. Thus, the loop termination decision step **526** utilizes such a comparison to determine if any peaks of significant intensity remain distinguishable above the system noise. If there are no remaining significant peaks present in the difference spectrum, then the method **150** branches to the final reporting step **527**. However, if data peaks are still present in the residual spectrum, the calculated RMS value will be larger than is appropriate for random noise and at least one more peak must be fitted and removed from the residual spectrum. In this situation, the method **150** branches to step **528** in which the most intense peak in the current difference spectrum is located and then to step **530** in which the program variable, current greatest peak, is set to the most intense peak located in step **528**. The method then loops back to step **508**, as indicated in FIG. 5.

Now that the overall set of steps in the method **150** have been described, the process that is used to model individual spectral features is now discussed in greater detail. Traditional spectral peak fitting routines generally model spectral features using either a Gaussian or Lorentzian forms (commonly referred to as peak shapes or line shapes) and tend to either use one preferred line shape throughout the fitting procedure or to query a user as to which line shape to use. Although any arbitrary peak shape can be modeled with a sum of Gaussians (perhaps requiring some Gaussians with negative intensities), the inventors have observed that commonly occurring natural peak shapes (especially in chromatographic spectral data) include Gaussians or even Gamma-distribution-like functions with tailing or leading edges. Therefore, methods in accordance with the present invention may employ a library of peak shapes containing at least four curves (and possibly others) to model observed peaks: a Gaussian for peaks that are nearly symmetric; a sum of two Gaussians for peaks that have a leading edge (negative skewness); a and either an exponentially modified Gaussian or a Gamma distribution function for peaks that have a tailing edge (positive skewness).

The modeling of spectral peaks with Gaussian line shapes is well known and will not be described in great detail here. Methods in accordance with the invention may use a Gaussian functional form that utilizes exactly three parameters for its complete description, these parameters usually being taken as area $A$, mean $\mu$ and variance $\sigma^2$ in the defining equation:

$$I\left(x;\, A, \mu, \sigma^2\right) = \frac{A}{\sigma\sqrt{2\pi}} \exp\left(-\frac{(x-\mu)^2}{2\sigma^2}\right). \qquad \text{Eq. 1}$$

in which $x$ is the variable of spectral dispersion (generally the independent variable or abscissa of an experiment or spectral plot) such as wavelength, frequency, or time and $I$ is the spectral ordinate or measured or dependent variable, possibly dimensionless, such as intensity, counts, absorbance, detector current, voltage, etc. Note that a normalized Gaussian distribution (having a cumulative area of unity and only two parameters-mean and variance) would model, for instance, the probability density of the elution time of a single molecule. In the three-parameter model given in Eq. 1, the scale factor $A$ may be taken as the number of analyte molecules contributing to a peak multiplied by a response factor.

As is known, the functional form of Eq. 1 produces a symmetric line shape (skew, S, equal to unity) and, thus, step **511** in the method **150** (FIG. 5) utilizes a Gaussian line shape when the estimated peak skew is in the vicinity of unity, that is when $(1-\varepsilon) \leq S \leq (1+\varepsilon)$ for some positive quantity $\varepsilon$. In the illustration shown in FIG. 5, the quantity $\varepsilon$ is taken as 0.05, but it could be any other pre-defined positive quantity. A statistical fit may performed within a range of data points established by a pre-defined criterion. For instance, the number of data points to be used in the fit may be calculated by starting with a pre-set number of points, such as 12 points and then adjusting, either increasing or decreasing, the total number of data points based on an initial estimated peak width. Preferably, downward adjustment of the number of points to be used in the fit does not proceed to less than a certain minimum number of points, such as, for instance, five points.

Alternatively, the fit may be mathematically anchored to the three points shown in FIG. 6. Alternatively, the range of the fit may be defined as all points of the peak occurring above the noise threshold. Still further alternatively, the range may be defined via some criterion based on the intensities of the points or their intensities relative to the maximum point **606**, or even on criterion based wholly or in part on calculation time. Such choices will depend on the particular implementation of the method, the relative requirements for calculation speed versus accuracy, etc.

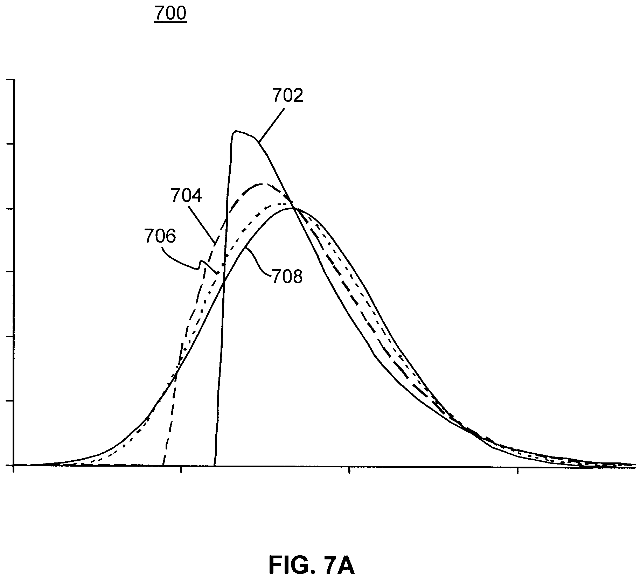

If S>(1+ε), then the data peak is skewed so as to have an elongated tail on the right-hand side. This type of peak may be well modeled using either a line shape based on either the Gamma distribution function or on an exponentially modified Gaussian (EMG) distribution function. Examples of peaks that are skewed in this fashion (all of which are synthetically derived Gamma distributions) are shown in FIG. 7A. If the peaks in FIG. 7A are taken to be chromatograms, then the abscissa in each case is in the units of time, increasing towards the right. The inventors have observed that peaks with this form of skew (S>(1+ε) with ε>0, termed "peak tailing") are common in chromatographic data.

The general form of the Gamma distribution function, as used herein, is given by:

$$I\left(x;\, A, x_0, M, r\right) = A\frac{r^M\left(x-x_0\right)^{M-1}e^{-r(x-x_0)}}{\Gamma(M)} \quad x \geq x_0 \qquad \text{Eq. 2}$$

in which the dependent and independent variables are x and I, respectively, as previously defined, $\Gamma(M)$ is the Gamma function, defined by $\Gamma(M) = \int_0^\infty u^{M-1}e^{-u}\,du$ and are $A$, $x_0$, $M$ and $r$ are parameters, the values of which are calculated by methods of the invention. Note that references often provide this in a "normalized" form (i.e., a probability density function), in which the total area under the curve is unity and which has only three parameters. However, as noted previously herein, the peak area parameter $A$ may be taken as corresponding to the number of analyte molecules contributing to the peak multiplied by a response factor.

The inventors consider that a chromatographic peak of a single analyte exhibiting peak tailing may be modeled by a four-parameter Gamma distribution function, wherein the parameters may be inferred to have relevance with regard to physical interaction between the analyte and the chromatographic column. In this case, the Gamma function may be written as:

$$I(t; A, t_0, M, r) = A \frac{r^M (t - t_0)^{M-1} e^{-r(t-t_0)}}{\Gamma(M)} \quad t \geq t_0 \qquad \text{Eq. 2a}$$

in which $t$ is retention time (the independent variable), $A$ is peak area, $t_0$ is lag time and $M$ is the mixing number. Note that if $M$ is a positive integer then $\Gamma(M) = (M-1)!$ and the distribution function given above reduces to the Erlang distribution. The adjustable parameters in the above are A, $t_0$, $M$ and $r$. FIG. 7A illustrates four different Gamma distribution functions for which the only difference is a change in the value of the mixing parameter, $M$. For curves **702, 704, 706** and **708,** the parameter $M$ is given by $M=2$, $M=5$, $M=20$ and $M=100$, respectively. In the limit of high $M$, the Gamma function approaches the form of a Gaussian function.

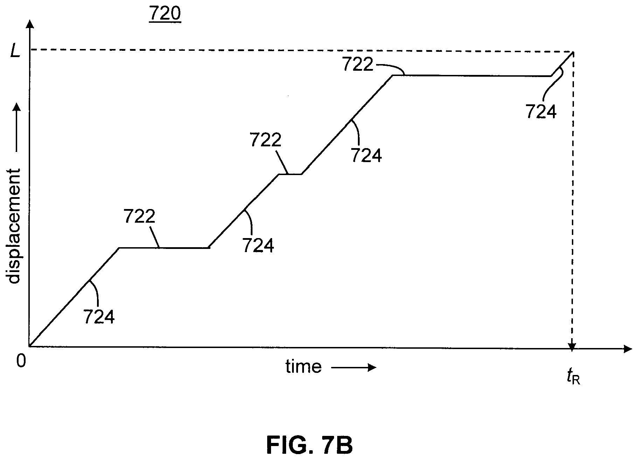

FIG. 7B is a schematic illustration of a theoretical model of movement of a molecule in a chromatographic column during mass chromatography. The abscissa of FIG. 7B shows elution time running from zero up to the retention time $t_R$ and the ordinate represents displacement distance of an analyte through the column, starting from the column inlet up to the full length, $L$, of the column. In the inventors' model, molecules of the analyte alternate between mobile and stationary phases a finite number, $M$, (see Eq. 2) of times within the column. It is further assumed that all molecules of the same analyte have nearly the same $M$ and that the value of $M$ for each analyte may be inferred from its peak shape in the chromatogram. At those times when an analyte molecule is in the mobile phase, it is assumed to travel at a constant velocity $v$ through the column and the displacement within the column is represented by slanting line segments **724** of constant and non-zero slope. The total time $\mu$ that the molecule resides in the mobile phase is the simple expression given as $\mu = L/v$ which represents a delay that shifts all peaks to the right by the same amount. This delay, along with other factors, such as dead volume, is encapsulated in the parameter $t_0$ (see Eq. 2). In the inventors' model, it is assumed that mobile phase velocity $v$ is constant for a given analyte and, thus, the occurrence of "multiple paths" and longitudinal diffusion is negligible.

Continuing with the discussion of FIG. 7B, it is assumed that during those times when an analyte molecule resides in the stationary phase, it does not move at all. These times are represented by the horizontal line segments **722**. In the inventors' model, it is further assumed that the desorption of an analyte molecule from the stationary phase is a Poisson process and that the probability of desorption is homogeneous in time. Therefore the duration of analyte adsorption (that is, the length of the horizontal line segments **722** in FIG. 7B) is a random variable $\lambda$ given by an exponential probability density distribution function having parameter $r$ (see Eq. 2).

With the assumptions given above, the total retention time $t_R$ of an analyte is a random variable given by the expression $t_R = \dfrac{L}{v} + \sum_{m=1}^{M} \lambda_m$ in which the summation is taken over a total of $M$ independent exponentially distributed random variables. If $M$ is an integer, then the summation shown in the above equation yields an Erlang-distributed random variable. In fact, the value of $M$ would be Poisson distributed in a population of molecules, so the retention time would be modeled by the superposition of multiple Erlang random variables. A simple closed-form approximation can be constructed by replacing the distribution of values of $M$ with a constant value that may be loosely interpreted as the mean value of $M$. The generalization of the Erlang distribution to real-valued $M$ is the Gamma distribution (Eq. 2).

The Gamma distribution model as derived above does not specifically account for chemical diffusion. The presence of diffusion is accommodated by values of $M$ which are, in fact, larger than the average number of desorption events. A different model, the exponentially modified Gaussian (EMG) distribution function, may be used to model the retention time as the outcome of one desorption event and the time required for an analyte molecule to diffuse to the end of the column.

The general, four-parameter form of the exponentially modified Gaussian (EMG) distribution, as used in methods according to the present invention, is given by a function of the form:

$$I\left(x; A, x_0, \sigma^2, \tau\right) = A \int_{-\infty}^{x} \frac{1}{\sigma\sqrt{2\pi}} e^{-(u-x_0)^2/2\sigma^2} \frac{1}{\tau} e^{-(x-u)/\tau} du \qquad \left(x \geq 0; \tau > 0\right) \qquad \text{Eq. 3.}$$

Thus, the EMG distribution used herein is defined as the convolution of an exponential distribution with a Gaussian distribution. In the above Eq. 3, the independent and dependent variables are x and I, as previously defined and the parameters are A, t0, $\sigma$2, and $\tau$. The parameter A is the area under the curve and is proportional to analyte concentration and the parameters t0 and $\sigma$2 are the centroid and variance of the Gaussian function that modifies an exponential decay function.

The inventors consider that an exponentially-modified Gaussian distribution function of the form of Eq. 3 may be used to model some chromatographic peaks exhibiting peak tailing. In this situation, the general variable *x* is replaced by the specific variable time *t* and the parameter $x_0$ is replaced by $t_0$. The exponential portion may be taken to indicate a hypothetical distribution of residence times of analyte molecules on the stationary phase for a single (or small number of) of adsorption events per molecule and the Gaussian portion may be taken to represent the superimposed effects of diffusion in the mobile phase. The existence of an EMG-distribution best fit, as opposed to a Gamma-function best fit, may be taken to indicate a chromatic separation in which the analyte has lesser tendency to bind to the stationary phase.

FIG. 8 illustrates, in greater detail, various sub-steps that may be included in the step **512** of the method **150** (see FIG. 1 and FIG. 5) within embodiments in accordance with the present invention. More generally, FIG. 8 outlines an exemplary method for choosing between line shape forms in the modeling and fitting of an asymmetric spectral peak. The method **512** illustrated in FIG. 8 may be entered from step **510** of the method **150** (see FIG. 5).

When method **512** is entered from step **510** (see FIG. 5), the skew, *S*, is greater than (1+$\varepsilon$), because the respective "No" branch has previously been executed in each of steps **509** and **510** (see FIG. 5). For instance, if $\varepsilon$ is set to 0.05, then the skew is greater than 1.05. When $S>(1+\varepsilon)$, both the EMG distribution (in the form of Eq. 3) and the Gamma distribution may be fit to the data and one of the two distributions may be selected as a model of better fit on the basis of the squared difference (chi-squared statistic).

From step **808**, the method **512** (FIG. 8) proceeds to step **810**. In these two steps, first one line shape and then an alternative line shape is fitted to the data and a chi-squared statistic is calculated for each. The fit is performed within a range of data points established by a pre-defined criterion. For instance, the number of data points to be used in the fit may be calculated by starting with a pre-set number of points, such as 12 points and then adjusting, either increasing or decreasing, the total number of data points based on an initial estimated peak width. Preferably, downward adjustment of the number of points to be used in the fit does not proceed to less than a certain minimum number of points, such as, for instance, five points.

Alternatively, the fit may be mathematically anchored to the three points shown in FIG. 6. Alternatively, the range may be defined as all points of the peak occurring above the noise threshold. Still further alternatively, the range may be defined via some criterion based on the intensities of the points or their intensities relative to the maximum point 606, or even on criterion based wholly or in part on calculation time. Such choices will depend on the particular implementation of the method, the relative requirements for calculation speed versus accuracy, etc. Finally, in step **812**, the fit function is chosen as that which yields the lesser chi-squared. The method **512** then outputs the results or exits to step **516** of method **150** (see FIG. 5).

The determination of the best fit peak from among several potential line shapes as discussed above with reference to FIG. 8 employs a basic strategy in which the algorithm may try several or all line shapes in the "line shape library" for each and every one of the peaks. The chi-squared values computed for the best-fit peak of each type of line shape are used to decide which shape gives the best result. The inventors have, however, determined that such a calculation-intensive strategy is not always necessary since, especially with regards to chromatographic data, many peaks will have similar shapes, with certain natural peak shapes possibly predominating. Thus, in other alternative embodiments of methods in accordance with the invention, all line shapes are explored initially only for the first peak, then subsequent peaks may be fitted using the same line shape for the subsequent peaks until the chi-squared value increases by a certain predetermined limiting percentage. Once the chi-squared value has increased beyond a tolerable value, all line shapes are once again tried so as to determine a new best line shape. The new line shape is then employed for subsequent peaks until the chi-squared value once again increases by an amount greater than the predetermined percentage.

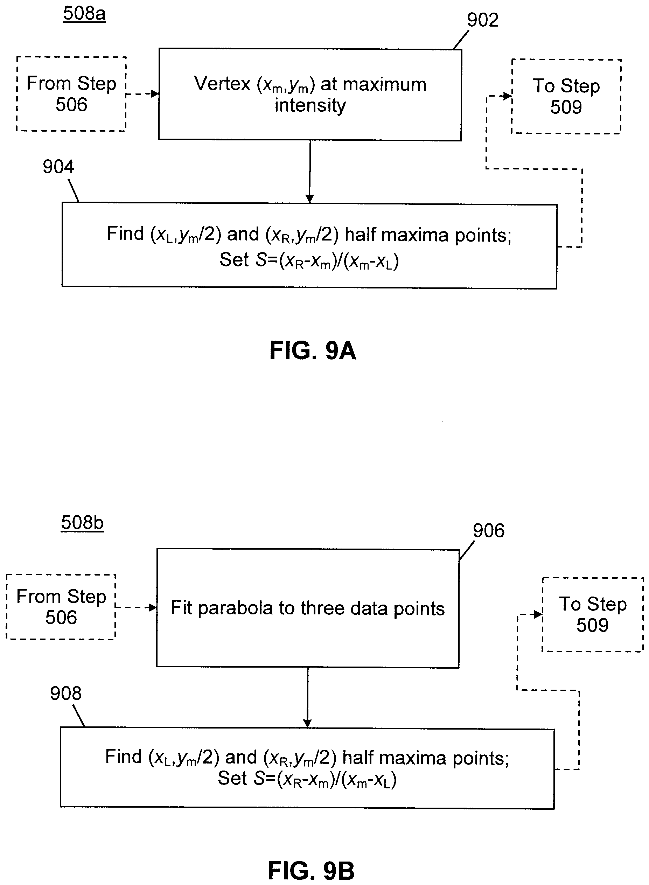

FIGS. 9A-9B are flowcharts that respectively illustrate, in greater detail, alternative sets of sub-steps that may be included in the step **508** of the method **150** (see FIG. 1 and FIG. 5) within embodiments in accordance with the present invention. More generally, FIGS. 9A and 9B illustrate steps for estimating coordinates of points at a peak maximum and along flanks of the peak at half-height, according to a first exemplary method, method **508a** (FIG. 9A) as well as according to an alternative exemplary method, method **508b** (FIG. 9B) in accordance with the present invention. Each of the two methods **508a** (FIG. 9A) and **508b** (FIG. 9B) may be entered from step **506** of method **150** (FIG. 5) and may output data or exit to step **509** of method **150**. Upon detection of a peak, the point of maximum intensity (e.g., point **606** of FIG. 6) may be taken as an initial estimate of the peak vertex $(x_m, y_m)$ as in step **902** of method **508a**. Alternatively, the sample of maximum intensity and its two nearest neighbors may be fit to a parabola as in step **906** of method **508b**, and then the vertex of the parabola used to provide an estimate of the interpolated peak vertex (which in general does not exactly coincide with a data point of a spectrum). Next, in either step **904** of method **508a** or step **908** of method **508b**, the left and right half maxima of the detected peak (e.g., points **604** and **608**, respectively, of FIG. 6) are estimated by examining the sample values to the left and right (respectively), scanning outward from the peak vertex until encountering a value that is less than one-half the interpolated maximum value. Interpolated values of the left and right half-maxima are determined by fitting a line to sample points whose intensities lie above and below one-half the maximum intensity and finding the *x*-axis coordinate (either $x_L$ or $x_R$-see FIG. 6) of the point on the line that passes through the half-maximum intensity. Then, the estimated peak skew, *S*, is calculated as $S = (x_R - x_m)/(x_m - x_L)$.

Returning, once again, to the method **100** as shown in FIG. 1, it is noted that, after all peaks have been fit in step **150**, the next optional step, step **170** comprises refinement of the initial parameter estimates for multiple detected chromatographic peaks. Refinement comprises exploring the space of *N* parameters (the total number of parameters across all peaks, i.e. 4 for each Gamma/EMG and 3 for each Gaussian) to find the set of values that minimizes the sum of squared differences between the observed and model spectrum. Preferably, the squared difference may be calculated with respect to the portion of the spectrum comprising multiple or overlapped peaks. It may also be calculated with respect to the entire spectrum. The model spectrum is calculated by summing the contribution of all peaks estimated in the previous stage. The overall complexity of the refinement can be greatly reduced by partitioning the spectrum into regions that are defined by overlaps between the detected peaks. In the simplest case, none of the peaks overlap, and the parameters for each individual peak can be estimated separately.

The refinement process continues until a halting condition is reached. The halting condition can be specified in terms of a fixed number of iterations, a computational time limit, a threshold on the magnitude of the first-derivative vector (which is ideally zero at convergence), and/or a threshold on the magnitude of the change in the magnitude of the parameter vector. Preferably, there may also be a "safety valve" limit on the number of iterations to guard against non-convergence to a solution. As is the case for other parameters and conditions of methods of the invention, this halting condition is chosen during algorithm design and development and not exposed to the user, in order to preserve the automatic nature of the processing. At the end of refinement, the set of values of each peak area along with a time identifier (either the centroid or the intensity maximum) is returned. The entire process is fully automated with no user intervention required.

Finally, the last step, step **190**, in the method **100** (FIG. 1) comprises reporting peak parameters and, optionally, analyte identification and/or parameters relating to the operational state or physical characterization of the analytical instrumentation to a user. The peak parameters will, in general, be either those parameters calculated during the peak detection step **150** or quantities calculated from those parameters and may include, for each of one or more peaks, location of peak centroid, location of point of maximum intensity, peak half-width, peak skew, peak maximum intensity, area under the peak, etc. Other parameters related to signal to noise ratio, statistical confidence in the results, goodness of fit, etc. may also be reported in step **190**. The information reported in step **190** may also include characterizing information on one or more analytes and may be derived by comparing the results obtained by the methods described herein to known databases. Such information may include chemical identification of one or more analytes (e.g., ions, molecules or chemical compounds), purity of analytes, identification of contaminating compounds, ions or molecules or, even, a simple notification that an analyte is (or is not) present in a sample at detectable levels.

The examples in the foregoing discussion have illustrated the synthesis of a model peak for each detected actual peak and the calculation of a variety of parameters (e.g., center, width, skew, intensity, etc.) for each such model peak. Thus, execution of a non-linear optimization method such as the Marquardt-Levenberg Algorithm (MLA) or the Newton-Raphson algorithm is performed for each peak. This step is frequently the slowest step in the above-described methods. In order to increase the speed of the calculations, it is possible, for some types of spectral data, to restrict full execution of the optimization routine to just the first detected peak and then to re-use, in the fitting of each subsequent peak, the peak shape parameters (e.g., width, skew or type of model function) determined from the first peak. In embodiments employing this strategy, only the parameters relating to the location and intensity of each peak after the first are determined or estimated for the second and all subsequent peaks. For instance, if the first peak is fit with a Gaussian (Eq. 1) and if it may be assumed that neither the Gaussian character nor the parameter $\sigma$ vary significantly among peaks, then, for each peak after the first, the decision steps **509** and **510** in method **150** may be bypassed and only the parameters *A* and $\mu$ need to be determined. These latter two parameters may perhaps be calculated for each peak by a reduced or constrained version of the optimization algorithm, thereby increasing execution speed.

The foregoing description has mainly dealt with characterizing peaks in spectral data comprising just two variables (e.g., situations in which the spectral data may be plotted as a simple graph). Frequently, however, routine spectral data include three or more variables. One important and common example of such data is the measurement of chromatography-mass spectrometry data - for instance, as derived in the well-known techniques of liquid chromatography-mass spectrometry (LC/MS) and gas chromatography-mass spectrometry (LC/MS). In these latter two analytical techniques, various separated analytes whose elution from a chromatographic column is a function of the variable, time, are submitted for mass analysis by a mass spectrometer. The mass spectrometer, which is used as the detector for the chromatographic column, generates, in real time, detected relative ion abundance data for ions produced from each eluting analyte, in turn. Thus, such data is inherently three-dimensional, comprising the variables of time, mass (or mass-to-charge ratio) and ion abundance.

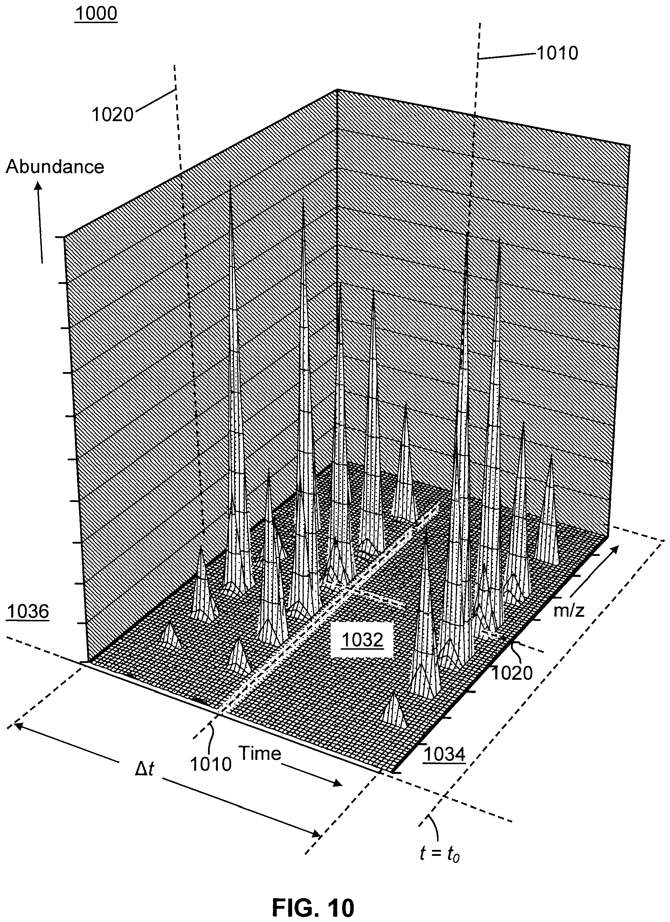

FIG. 10 is a perspective view of a three-dimensional graph of hypothetical GC/MS data. As is common in the representation of such data, the variables time, $t$, and mass (or mass-to-charge ratio, $m/z$) are depicted on the "floor" of the perspective diagram and the variable representing ion abundance (for instance, detected ion current) is plotted in the "vertical" dimension of the graph. Thus, ion abundance is represented as a function of the other two variables, this function comprising a variably shaped surface above the "floor". Each set of peaks dispersed and in line parallel to the $m/z$ axis represents the various ions produced by the ionization of a single eluting analyte (or, possibly, of fortuitously co-eluting analytes) at a restricted range of time. In a well-designed chromatographic experiment, each analyte of a mixture will elute from the column (thereby to be mass analyzed) within a particular diagnostic time range. Consequently, either a single peak or a line of mass-separated peaks, each such peak representing a particular ion produced by the eluting analyte, is expected at each elution time range.

The data depicted in FIG. 10 may comprise an entire stored data file representing results of a prior experiment. Alternatively, the data represent a portion of a larger data set in the process of being acquired by a GC/MS or LC/MS or other analytical instrument. For instance, the data depicted in FIG. 10 may comprise recently collected data held in temporary computer readable memory, such as a memory buffer, and corresponding to an analysis time window, $\Delta t$, upon which calculations are being formed while, at the same time, newer data is being collected. Such newer, not-yet-analyzed data is represented, in time and $m/z$ space, by region **1034** and the data actually being collected is represented by the line $t=t_0$. Older data which has already been analyzed by methods of the invention and which has possibly been stored to a permanent computer readable medium, is represented by region **1036**. With such manner of operation, methods in accordance with the invention are carried out in near-real-time on an apparatus used to collect the data or using a processor (such as a computer processor) closely linked to the apparatus used to collect the data.

For clarity, only a very small number of peaks are illustrated in FIG. 10. In practice, data obtained by a chromatography-mass spectrometry experiment may comprise a very large volume of data. A mass spectrometer may generate a complete "scan" over an entire mass range of interest in a matter of tens to hundreds of milliseconds. As a result, up to several hundred complete mass spectra may be generated every second. Further, the various analytes may elute over a time range of several minutes to several tens of minutes, depending on the complexity of the mixture under analysis and the range of retention times represented.

Although a full set of GC/MS or LC/MS data may be stored for post-experiment off-line analysis, the great speed at which data is acquired generally only allows a limited subset of the data to be available to an operator or to instrumental monitoring or control systems during the course of the experiment. The following discussion, together with the accompanying FIGS. 10-16, teach methods, in accordance with the invention, whereby a set of peaks in three-dimensional or higher-dimensional spectral data may be identified and characterized in near real time. The peaks characterization includes determining various peak parameters such as peak center position, peak width, peak skewness and peak area. Because of the potential variability of the data as well as the speed at which the data is generated, it is preferable for these parameters to be determined automatically, without the requirement of user input.

The methods described below generally include performing a search, such as a binary search, of a range of the mass and time dimensions of a chromatographic-mass spectral data set in order to locate and optimize the unique mass and time ranges defining each peak, and subsequent utilization of the peak detection methods, as described above, to provide further detailed analyses of peaks within one or more of the mass ranges. The functionality and efficiency of the methods described above are increased, in some embodiments in accordance with the invention, by an additional procedure whereby an initial estimate of the number of peaks (e.g, determining whether there are no peaks, a single peak, or a plurality of peaks) in a mass and time range of the data set is made, this estimation being approximately ten times faster than actually detecting these peaks according to the methods described above.

Estimating peaks works as follows. First, baseline removal and noise level estimation proceeds as described above (e.g., see FIG. 2). Next, the number of peaks within a given mass and time range of multi-variable data, which initially comprises the full range of data but which, later, may be a subset of the full range of data resulting from one or more repeated subdivisions of the full range, is estimated by approximate detection of additional peaks within the given range.

For calculation speed, the estimation of the number of peaks within the given mass and time range may be simplified so as to provide one of only three outcomes - whether no peaks, a single peak or a plurality of peaks occur above the signal-to-noise level within the given range. If there are no peaks (above the signal-to-noise level) within the given range, then that range of data is excluded from further consideration and data processing proceeds to consider another subdivision of the full data range (if any other sub-divisions exist). If the peak number estimation procedure detects a first peak within the given range, then that peak is modeled by a synthetic fit peak as in method **150** (FIG. 5), the determined peak parameters are recorded, and the synthetic peak is subtracted from the data as described previously. If the peak number estimation procedure fails to subsequently detect the presence of a second peak within the given mass and time range, then peak detection within that particular range of data is finished and that range is excluded from further consideration. However, if a second peak is detected (that is, there are at least two peaks in the given range), then the given range is subdivided into quadrants (or other subdivision unit) and the peak-number estimation procedure is repeated for each such quadrant, in turn.

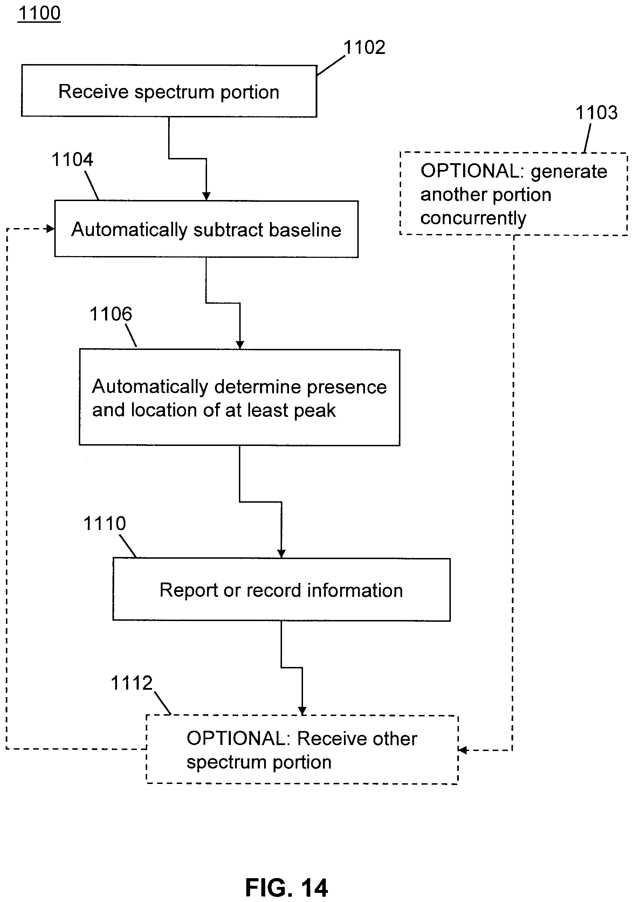

FIG. 14 provides a flowchart of an example sequence of general steps according to the strategy discussed in the preceding paragraph. In the method **1100** shown in FIG. 14, a portion of spectrum from a chromatography / mass spectrometry apparatus is received in the step **1102**. The spectrum may, in general, be characterized by at least a time-related variable (e.g., retention time), a mass-related variable (e.g., mass-to-charge ratio) and an ion-abundance-related variable (e.g., ion current as measured by a detector of a mass spectrometer). For convenient graphical and discussion purposes only, the mass-related and time-related variables may be taken as independent variables and the ion-abundance variable may be taken as a single dependent variable (i.e., see FIG. 10).

In the next step **1104** of the method **1100**, a baseline is automatically subtracted from the portion of the spectrum so as to generate a baseline-corrected spectrum portion. The baseline may be determined by the procedure outlined in FIG. 2 using a polynomial representation and possibly an exponential representation defined in terms of one or both of the independent variables. Once the baseline has been determined and subtracted, an automatic determination is made regarding whether at least one spectral peak occurs in the baseline-corrected spectrum portion in step **1106**. Optionally, if any such peaks are determined to occur, the location of at least one of the peaks (generally a pair of location coordinates for a "center" of the peak, one such coordinate relating to the time-related variable and the other coordinate of the pair relating to the mass-related variable) may also be automatically determined. Lastly, in step **1110**, information relating at least to the number of peaks automatically determined in the portion of the chromatography / mass spectrometry spectrum is reported or recorded for later use. Information relating to location coordinates may also be recorded or reported. Also, the raw data itself may be stored - referring to FIG. 10, this is equivalent to transferring data from region **1032** to region **1036**.

Optionally, the chromatography / mass spectrometry apparatus may be (see step **1103** of method **1100**) generating another portion of the spectrum concurrently with the execution of steps **1102** through **1110**. Referring once again to FIG. 10, for example, the apparatus may continue to generate new data at time *t*=0 and temporarily store data relating to region **1034** at the same time that data within region **1032** is being processed according to one or more of steps **1102** through **1110**. In step **1112**, the other portion of the spectrum may be received and then steps **1104** through **1110** executed using the data of this other spectrum portion. Thus, data which was previously held in temporary storage in region **1034** is transferred to region **1036** and, at the same time, region **1034** may be populated with yet more recent data.

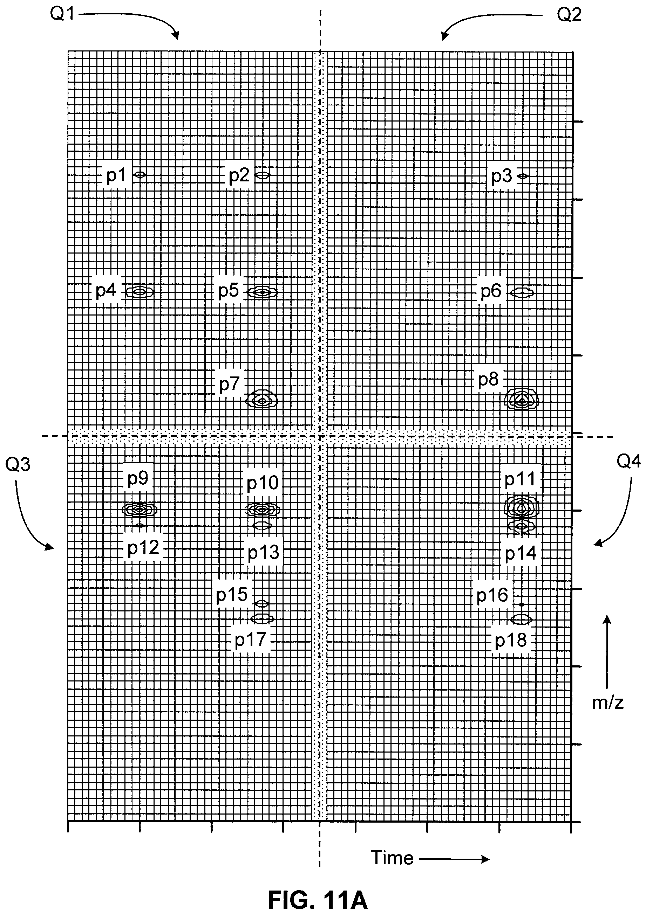

FIGS. 11A-11D provide a more detailed illustration of an example of a peak locating and number-of-peaks estimation procedure according to the invention, as may be used, for instance, in the implementation of step **1106** of method **1100**. FIG. 11A is a projection of the graph of the eighteen most intense peaks of FIG. 10 onto the "floor" of the graph, viz. the geometric plane defined by the axes of time, *t*, and *m/z*, this latter axis or quantity frequently being referred to, herein, as the "mass axis" or as "mass". The position as well as an indication of the "height" of each peak are indicated by contour lines in FIG. 11A. First, the data region under consideration is divided into sub-regions by planes, such as planes **1010** and **1020** (see FIG. 10) which are represented by dashed lines in FIG. 11A. The sub-regions in the mass and time dimensions are shown as quadrants **Q1, Q2, Q3** ands **Q4** in FIG. 11A. As shown, quadrant **Q1** contains peaks **p1, p2, p4, p5,** and **p7**; quadrant **Q2** contains peaks **p3, p6** and **p8**; quadrant **Q3** contains peaks **p9, p10, p12, p13, p15** and **p17** and quadrant **Q4** contains peaks **p11, p14, p16** and **p18**. Although division into quadrants and sub-quadrants is often convenient, the division of the data region may proceed according to some other divisional scheme, or not at all.

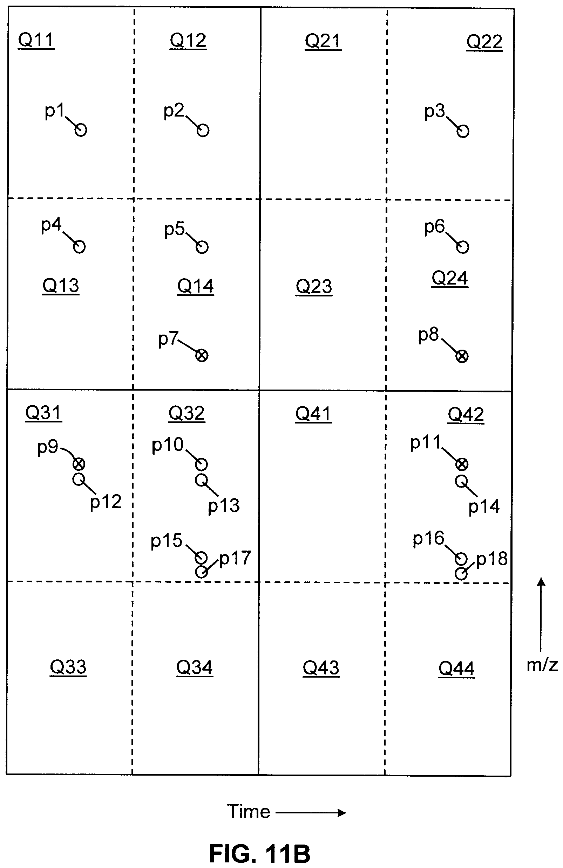

The peak detection and number estimation routine investigates the data in each quadrant, in turn. This routine notes that peak **p7** is the most intense peak in quadrant **Q1,** peak **p8** is the most intense peak in quadrant **Q2,** peak **p9** is the most intense peak in quadrant **Q3,** and peak **p11** is the most intense peak in quadrant **Q4**. Accordingly, each of these four peaks is fit with a respective synthetic peak as in method **150** (FIG. 5), the determined peak-defining parameters are recorded, and the synthetic peaks are subtracted from the baseline-corrected data. For simplicity, this subtraction of the synthetic peaks is referred to as "removal" of the peaks from the data. The peak detection and number estimation routine also notes that, after subtraction of the fitted peaks, at least one additional peak exists within each quadrant. Thus, in a second pass through the data, each of the original quadrants is further divided so as to yield the sixteen sub-quadrants shown in FIG. 11B. Specifically, quadrant **Q1** is subdivided into sub-quadrants **Q11, Q12, Q13** and **Q14;** quadrant **Q2** is subdivided into sub-quadrants **Q21, Q22, Q23** and **Q24;** quadrant **Q3** is subdivided into sub-quadrants **Q31, Q32, Q33** and **Q34** and quadrant **Q4** is subdivided into sub-quadrants **Q41, Q42, Q43** and **Q44.** For clarity, the positions of the peaks are represented by circles in FIG. 11B and subsequent figures, with inscribed crosses indicating the positions of peaks subtracted (removed) in the immediately preceding pass through the data.

In the second pass through the data, the peak detection and number estimation routine investigates the data in each of the sixteen sub-quadrants shown in FIG. 11B, in turn. In this example, the routine detects that there are no peaks (above the noise level) in each of sub-quadrants Q21, Q23, Q33, Q34, Q41, Q43 and Q44. Thus, these seven quadrants are removed from further analysis. Further, the routine notes that only a single peak remains in each of the sub-quadrants **Q11, Q12, Q13, Q14, Q22, Q24** and Q31. Accordingly, each of the peaks **p1, p4, p5, p3, p6** and **p12** is fitted to the data, the determined peak-defining parameters are recorded, and the resulting synthetic peaks are subtracted from the data. The routine also notes that each of the sub-quadrants **Q32** and **Q42** contains more than one remaining peak. The most intense peak in each such sub-quadrant (specifically point **p10** in sub-quadrant **Q32** and point **p14** in sub-quadrant **Q42**) is fitted, recorded, and removed as before.

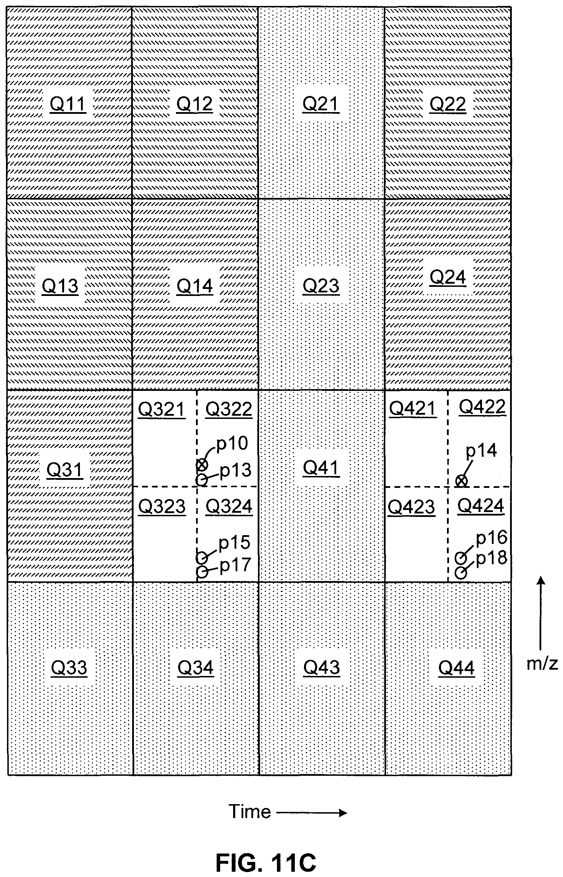

In a third pass through the data, the two remaining sub-quadrants **Q32** and **Q42** are further subdivided as shown in FIG. 11C. In FIG. 11C, sub-quadrants which were removed from consideration in the second pass are shown with either a stipple or a crosshatched pattern depending, respectively, on whether the sub-quadrant in question was determined to contain no peaks or just a single peak (which was subsequently fitted, recorded and removed). Specifically, sub-quadrant **Q32** is further divided into the four sub-quadrant sub-divisions **Q321, Q322, Q323, Q324** and sub-quadrant **Q42** is further divided into the four sub-quadrant sub-divisions **Q421, Q422, Q423, Q424**. As described before, the peak detection and number estimation routine investigates the data in each of the eight sub-quadrant sub-divisions, in turn. In so doing, the routine notes that the five sub-quadrant sub-divisions **Q321, Q323, Q421, Q422** and **Q423** contain no remaining peaks above the noise level and thus, these five sub-quadrant sub-divisions are removed from further consideration. The routine also fits, records and removes each remaining peak of greatest intensity in each of the three remaining sub-quadrant sub-divisions, specifically point **p13** in sub-quadrant sub-division **Q322,** point **p17** in sub-quadrant sub-division **Q324** and point **p18** in sub-quadrant sub-division **Q424.**

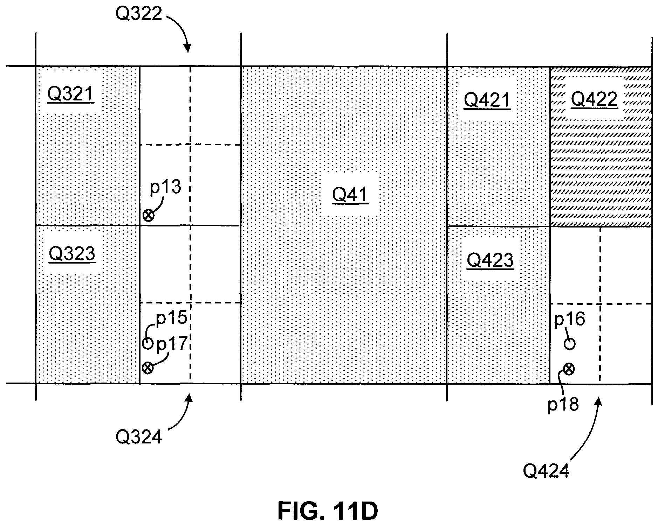

The calculations described above result in just two remaining peaks, **p15** and **p16,** as shown in FIG. 11D, which depicts an expanded portion of the diagram of FIG. 11C encompassing the original quadrants **Q32, Q41** and **Q42.** In a fourth pass through the data, the procedure described above is repeated once again, with each of the three remaining sub-quadrant sub-divisions further divided as shown. In the fourth pass the peaks **p15** and **p16** are each fit and removed from the data. In a fifth pass through the data, the peak detection and number estimation routine will note that no remaining data region contains any peaks above the noise level and the routine terminates.

The peak detection, enumeration and fitting routines described above for GC/MS or LC/MS or other multidimensional data improve calculation efficiency and speed by performing a structured peak search that rapidly identifies and eliminates from consideration data regions within which no peaks occur. To increase calculation speed still further, it is possible, for some types of spectral data, to restrict full execution of the optimization routine to just the first detected peak and then to re-use, in the fitting of each subsequent peak, the peak shape parameters (e.g., width, skew or type of model function) determined from the first peak. In embodiments employing this strategy, only the parameters relating to the location and intensity of each peak after the first are determined or estimated for the second and all subsequent peaks.

The model fitting of peaks which are functions of two variables may, in many situations, be modeled as simply the product of two functions, each such function of one variable only. For instance, for the GC/MS data illustrated in FIG. 10, the model synthetic peaks will be functions of both of the variable time, $t$ and mass-to-charge ratio, $m/z$. The peak shape as a function of mass-to-charge ratio, $m/z$, may, to a good approximation, be taken as independent of the peak shape as a function of time, $t$. As a result, the function, $I(t, m/z)$ representing the synthetic peak may be represented as the simple product $I(t, m/z) = A\ T(t)\ M(m/z)$ where $A$ is a constant and where $T$ and $M$ are functions of only $t$ and of only $m/z$, respectively. As one example, the function $T$ might have the form of an exponentially modified Gaussian function and the function $M$ might have the form of a Gaussian function.

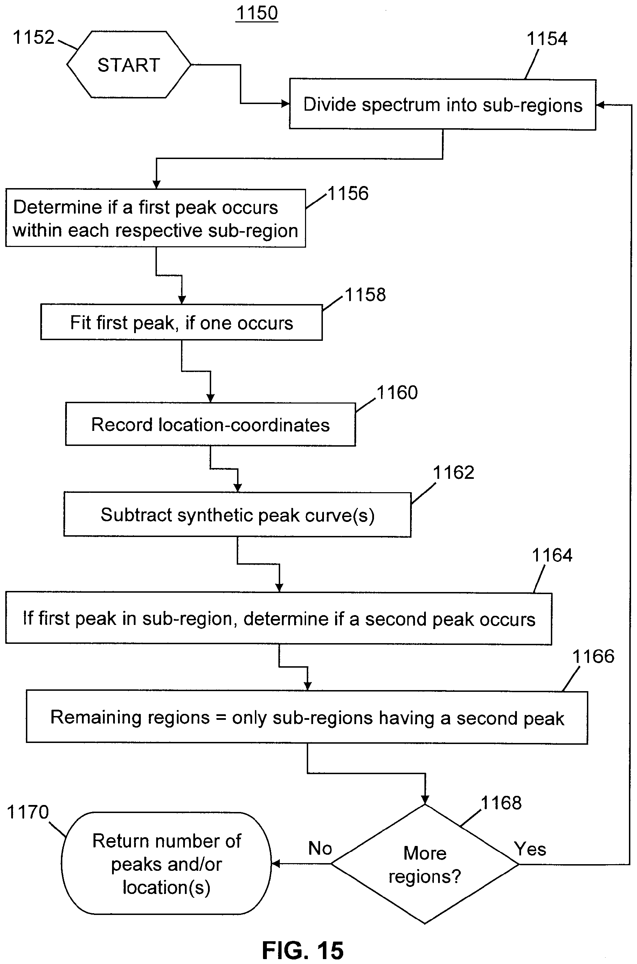

FIG. 15 is a flowchart of a method comprising a general sequence of steps which may be employed to locate and estimate the number-of-peaks (zero or more) within a spectrum portion, similar to the scheme graphically illustrated in FIGS. 11A-11D. In the initial step **1152** of the method **1150** (FIG. 15), the remaining region of a spectrum portion is set so as to be, initially, the entire region of the spectrum portion. In step **1154**, which may be the first step in a loop, each remaining region of the spectrum is divided into sub-regions. In step **1156**, a determination is made, for each such sub-region, if a first peak occurs within the respective sub-region. For instance, a search may be made to find the most intense section of the spectrum, above the noise level, within the sub-region. Next, in step **1158**, for each sub-region for which a first peak was noted in the prior step, a set of parameters defining a synthetic best-fit curve for the respective first peak are calculated. The calculation may be performed by fitting a synthetic peak, possibly defined as functions of the two independent variables, to the most intense remaining peak within a sub-region. To initiate the fitting procedure, initial peak parameters may be estimated as shown in FIG. 6.

In step **1160** of the method **1150**, location coordinate parameters, which are determined as part of the above-described peak fitting procedure, are recorded and, in step **1162**, the synthetic best-fit synthetic peak in each sub-region is subtracted from the baseline-corrected spectrum portion. This is referred to herein as "removing" the peak from the spectrum. This removal is performed for every first peak (if any) found in a respective sub-region. Subsequently, in step **1164**, a determination is made, for each such sub-region for which a first peak was found, if another peak occurs within the respective sub-region.

In step **1166** of the method **1150**, a set of remaining regions of the spectrum portion is defined as only those sub-regions created in the most recent execution of step **1154** for which a second peak was determined to occur in the most recent execution of step **1164** and for which time-related and mass-related ranges are greater than resolution of the apparatus. This definition of the set of all remaining regions effectively excludes, from further consideration, all regions or sub-regions within which no peaks occur or for which all peaks have been removed (e.g., see shaded regions of FIGS. 11C and 11D). In step **1168**, if any remaining regions exist, execution of the method **1150** loops back to step **1154**; otherwise the method terminates in step **1170**, returning, as a result, information relating to the number of peaks found and, optionally, their location(s).

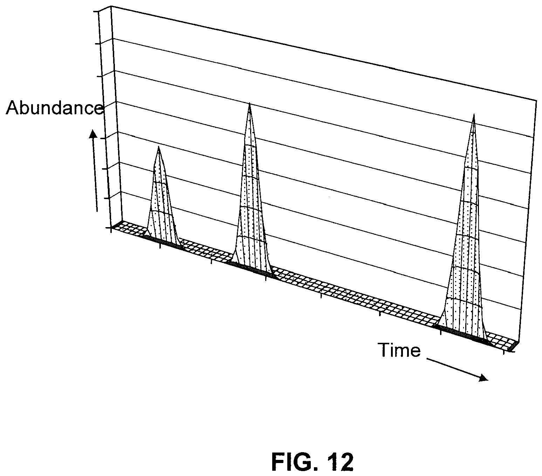

Alternatively, the model fitting of multidimensional data may, in many situations, be simplified by considering the data as being a function of a reduced number of independent variables - for instance, a single independent variable. As one example, FIG. 12 shows a simplified representation of GS/MS data which is created by simply projecting the values of relative abundance derived from a range of values of the variable $m/z$ onto the Cartesian plane represented by the axes of time and abundance. The projection may be accomplished by simply summing the data over a particular range of $m/z$ values at each time value. Each such set of projected data may then be considered, for the purposes of peak detection, counting and fitting, as a function of the single variable, time.

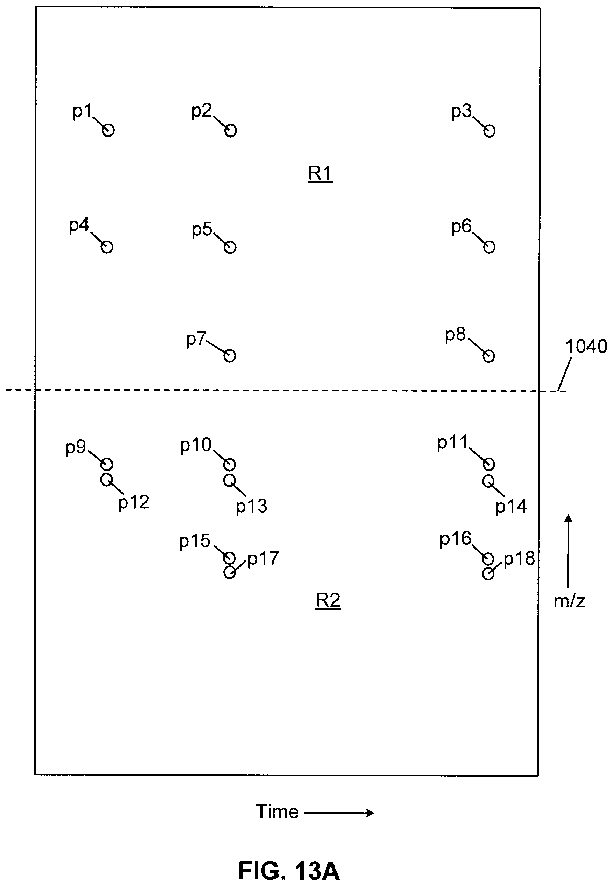

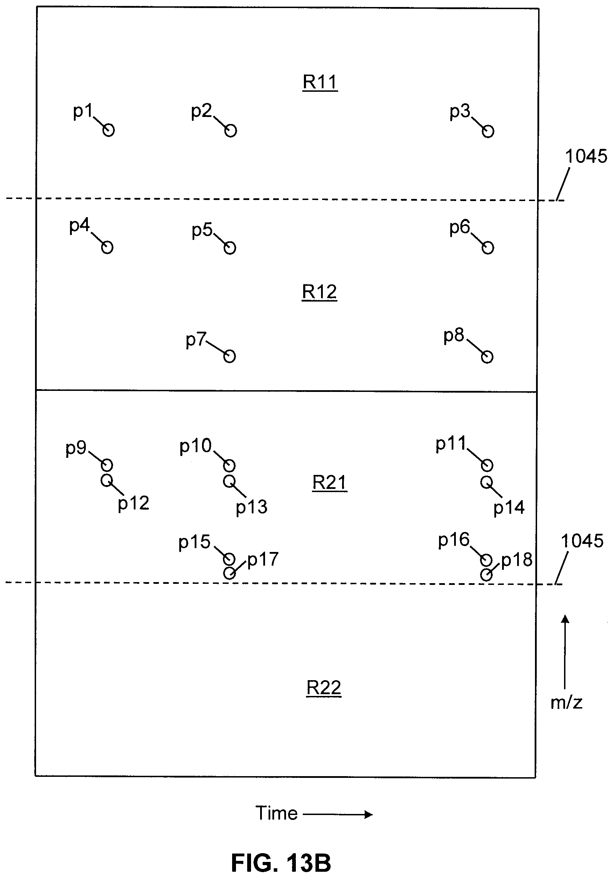

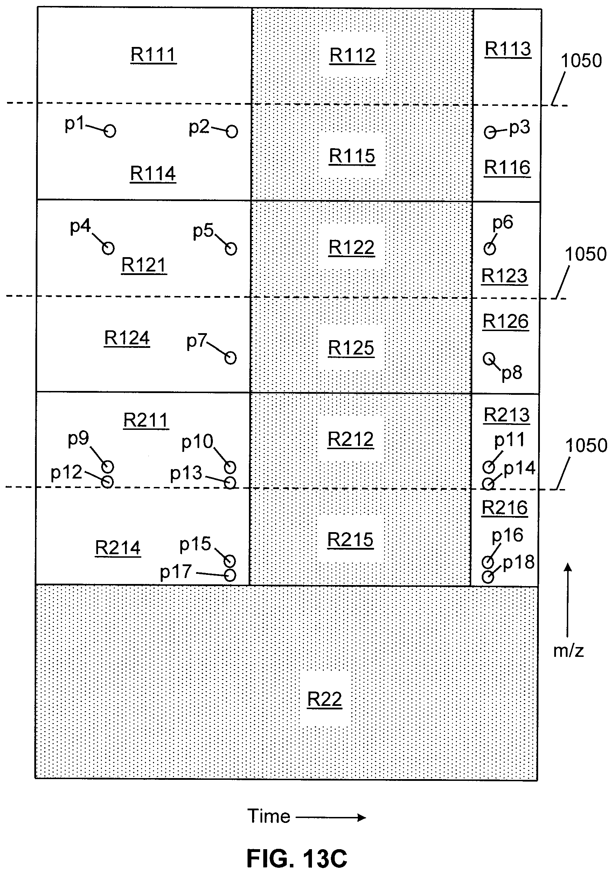

When the data is fitted as a function of only one variable, then, in contrast to the quadrant divisional search scheme shown in FIGS. 11A-11D, the data may, instead, be initially divided into halves, according to $m/z$, as shown in FIG. 13. Generally, during the first and each subsequent pass through the data, non-empty regions of the data (that is, regions of the data that do contain peaks) are divided in half according to $m/z$. A first such division occurs along line **1040** which divides the range of data into regions **R1** and **R2** as shown in FIG. 13A. After each such division, the intensity or abundance data within each newly created sub-region is separately considered by projecting the data onto the time axis as described above. The peaks are then located, enumerated and approximately fitted within each sub-region (e.g., regions **R1** and **R2**) by considering the intensity or abundance data (as projected) to be a function of the single variable, $t$. In the illustrated example, the projected data would appear, if hypothetically graphed, roughly similar to the depiction of FIG. 12, for each of sub-regions **R1** and **R2**.

During each pass, a first peak of the projected data is fit as in method **150** (FIG. 5). The fitting of subsequent peaks of the projected data, during early passes through the data (before the range of the mass axis scale has been narrowed to its final value), re-uses the peak shape parameters (e.g., width, skew or type of model function) determined from the first fitted peak. Refinement of the mass coordinates of the peaks is accomplished by subsequent progressive narrowing of the $m/z$ ranges under consideration by repeated sub-divisions.

After the approximate fitting of the projected data of each sub-region, each remaining non-empty sub-region is divided in half once again. For instance, FIG. 13B shows sub-region **R1** divided into smaller sub-regions **R11** and **R12** and sub-region **R2** divided into smaller sub-regions **R21** and **R22** by dividing lines **1045**. The peaks are then located, enumerated and approximately fitted within each sub-region (e.g., regions **R11, R12**, and **R21**) by considering the projected relative abundance data to be a function of the single variable, $t$, as described above.

The approximate fitting routine described above will effectively locate sub-regions that do not contain any peaks above the signal-to-noise level (such as occurs for sub-region **R22**) as well as large contiguous non-peak-bearing time ranges within individual sub-regions. The data of such empty sub-regions (such as the sub-regions **R22, R112, R115, R122, R125, R212,** and **R215,** see FIG. 13C) is excluded from further consideration during subsequent passes through the data. Such excluded sub-regions are indicated, in the present example, by the stippled areas in FIG. 13C. As shown in this latter figure, at the beginning of a third pass through the data, the prior sub-regions are further divided at the mid-points of their respective mass ranges by lines **1050.** Thus, subsequent peak locating, enumeration and fitting only occurs within the sub-regions **R11, R113, R114, R116, R121, R123, R124, R126, R211, R213, R214** and **R216.**

The iterative process described above halts naturally when the size of the mass range is equal to the mass resolution of the data. Alternatively, the iterative process described above may be continued until identical peak lists (quantity, as well as identical widths, positions, and SIN ratios) are produced for both newly created halves of a region or sub-region that has recently been divided according to mass. The $m/z$ coordinates of peaks may be determined by the $m/z$ coordinates of the respective sub-regions in which they are determined to occur.

In alternative embodiments, the peak locating, enumeration and fitting may be eliminated, during early iterations, and replaced by simple subtraction of the projected data obtained from one half of a region or sub-region from the projected data from the other half of the region or sub-region. In other words, after dividing a region or sub-region into two halves according to mass, the projected data of one half is simply subtracted from the projected data of the other half so as to yield a "difference spectrum". For instance, returning to FIG. 13A, in a first pass, the data range is divided into sub-regions **R1** and **R2,** and the projected data of sub-region **R2** is subtracted, time-point by time-point, from the projected data of sub-region **R1.** In general, extra peaks in sub-region **R2** (i.e, peaks present in **R2** but not in **R1**) will show up as "negative peaks" in the difference spectrum; extra peaks in sub-region **R1** will show up as positive peaks in the difference spectrum and peaks of different intensity or different widths will appear as either negative or positive peaks in the difference spectrum. However, once the mass range has been sufficiently narrowed, so as to isolate one or more actual peaks, then the difference spectrum will be approximately flat or will even have a mean of zero. Once this is observed, the data values from both adjacent sub-regions are summed and the actual peaks of the summed data are accurately located, enumerated and fitted (e.g., as illustrated in FIG. 5).

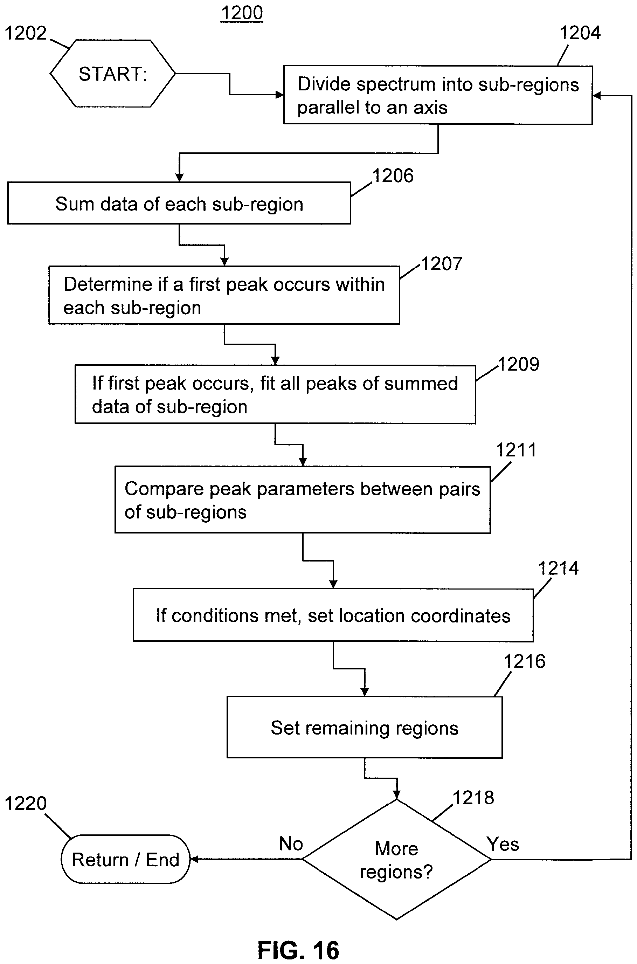

FIG. 16 is a flowchart of a method comprising a general sequence of steps which may be employed to locate and estimate the number-of-peaks (zero or more) within a spectrum portion, similar to the scheme graphically illustrated in FIGS. 13A-13C. The embodiment of figure 16 is not in accordance with the present invention. In the initial step 1202 of the method 1200 (FIG. 16), the remaining region of a spectrum portion is set so as to be, initially, the entire region of the spectrum portion. In step 1204, which may be the first step in a loop, each remaining region of the spectrum is divided into sub-regions parallel to a first axis (either time or mass) as shown, for instance, in FIGS. 13A-13B. In step 1206, the data is projected onto the first axis (for instance, by summation over a variable corresponding to a second axis) so as to generate simplified spectra - one spectrum for each sub-region - that represent abundance data as a function of a single independent variable - that is, the variable corresponding to the first axis. In step 1207, determinations are made, for each sub-region, if a first peak (in other words, if at least one peak) occurs within that sub-region. For each sub-region for which first peaks are found, then, in step 1209, all peaks represented in the simplified spectrum corresponding to the respective sub-region are synthetically fit so as to generate a list of peak parameters (mean, width, skew, etc.). The fitting procedure may include baseline subtraction and iterative peak identification, peak fitting and peak removal as previously described. After the fitting, the peak parameters derived from pairs of such simplified spectra relating to adjacent sub-regions are compared, in step 1211. This comparison provides, for each pair of sub-regions created by division of a region, a measure of a degree of similarity of the simplified spectra between the sub-regions. The reason for this step is that subsequent re-divisions may be safely halted when the members of such pairs of simplified spectra become sufficiently similar to one another. Thus, in step 1214, for those pairs of sub-regions for which the degree of similarity is greater than a predetermined threshold or for those sub-regions whose width is at or less than instrument resolution, the fit peak parameters are retained in a list for later use. The location coordinates of peaks along the first axis are set equal to parameters (for instance, mean values) determined from the synthetic fit peaks. Also, the peaks' location coordinates along the second axis are set according to the locations of the respective encompassing sub-regions.

In step 1216 of the method 1200 (FIG. 16), the remaining regions of the spectrum (regions subject to additional sub-division and analysis) are defined to be only those sub-regions created in the most recent execution of step 1204 for which at least one peak was found, for which the degree of similarity between regions is less than the threshold and for which time-related and mass-related ranges are greater than apparatus resolutions. If any such remaining regions exist, as determined in the decision step 1218, then execution of the method 1200 returns to step 1204 so as to repeat the steps 1204-1216 using the newly-defined remaining regions. Re-iteration of steps 1204-1216, continues using progressively smaller regions and sub-regions, until no more remaining regions exist, as determined by the criteria in step 1216. At this point, the method ends (in step 1220) and the peaks' location coordinates (and possibly other parameters) are returned, stored or reported.

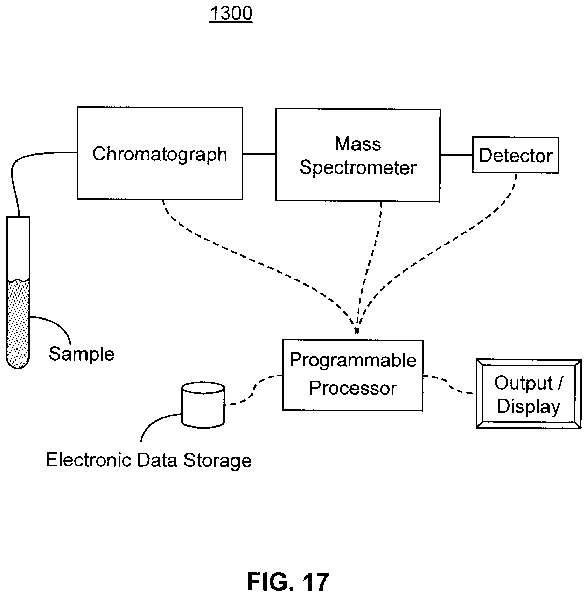

FIG. 17 is a schematic diagram of a system for generating and automatically analyzing chromatography / mass spectrometry spectra in accordance with the invention. A chromatograph, such as a liquid chromatograph, high-performance liquid chromatograph, gas chromatograph, etc., receives a sample of an analyte mixture of substances and at least partially separates the analyte mixture into individual chemical component substances, in accordance with well-known chromatographic principles. As a result, the at least partially separated chemical components are transferred to a mass spectrometer at different times for mass analysis. As each chemical component is received by the mass spectrometer, it is ionized by an ionization source of the mass spectrometer. The ionization source may produce a variety of ions comprising differing charges or masses from each chemical component. Thus, a plurality of ions of differing mass-to-charge ratios may be produced for each chemical component, each such component eluting from the chromatograph at its own characteristic time. These various ions are separated, generally according to their mass-to-charge ratios, by the mass spectrometer and the various separated ions are separately detected by the detector. Accordingly, data corresponding to a chromatography / mass spectrometry spectrum of the general type shown in FIG. 10 is generated by the analysis of each sample.

Still referring to FIG. 17, a programmable processor is electronically coupled to the detector of the mass spectrometer and receives the data produced by the detector during chromatographic / mass spectrometric analysis of the sample(s). Optionally, the programmable processor may also be electronically coupled to the chromatograph and/or the mass spectrometer in order to transmit electronic control signals to one or the other of these instruments so as to control their operation. The nature of such control signals may possibly be determined in response to the data transmitted from the detector to the programmable processor or to the analysis of that data. The programmable processor may also be electronically coupled to a display or other output, for direct output of data or data analysis results to a user, or to electronic data storage.

The programmable processor shown in FIG. 17 is generally operable to: receive a chromatography / mass spectrometry spectrum from the chromatography / mass spectrometry apparatus; automatically subtract a baseline from the spectrum so as to generate a baseline-corrected spectrum; automatically determine if at least one spectral peak occurs in the baseline-corrected spectrum; and report or record information relating at least to the number of peaks automatically determined in the chromatography / mass spectrometry spectrum. The programmable processor may also be operable to report or record information relating to the location coordinates of the peaks, if any, detected in the spectrum. The programmable processor may perform a detailed sequence of steps to automatically determine if at least one spectral peak occurs or the number of spectral peaks that occur and/or the locations of any peaks that occur in the spectrum of the sample in accordance with any of the methods **1100,1150** or **1200** as discussed herein.

An interesting and useful feature of methods in accordance with the invention is the possibility of also reporting, in the case of chromatographic data, information related to operational state or physical characterization of the analytical instrumentation that provided the chromatographic data. For instance, derivation of parameters used in fitting Gamma distributions to peak features may provide information on fundamental properties of analyte interaction between analyte molecules and the mobile and stationary phases of a chromatographic column. Such information may include, for instance, the average number of times that molecules of a particular analyte are adsorbed on the stationary phase during their transit through the column and the average time for desorption from the stationary phase back into the mobile phase. The comparison between line shapes for different analytes (for instance, Gamma versus Gaussian versus exponentially-modified Gaussian) may provide a relative measure of the importance of adsorption versus simple diffusion in the elution of compounds from the column. A user may then use such information to adjust the composition or physical characteristics of the mobile or stationary phases so as to facilitate better chromatographic separation of certain pairs of compounds.

Conclusion

The end result of methods described in the preceding text and associated figures is a robust, exhaustive and general method to detect peaks and characterize spectral peaks without user-adjustable parameters. It makes no assumptions about peak shape or width, and thus can detect a wide variety of peaks, even in a single chromatogram. Since it requires no user input, it is suitable for automation, use in high-throughput screening environments or for use by untrained operators. Computer instructions according to any of the methods described above may be supplied as a computer program product or products tangibly embodied on any form of computer readable medium, such computer program product or products themselves being embodiments of the invention.

The discussion included in this application is intended to serve as a basic description. Although the present invention has been described in accordance with the various embodiments shown and described, one of ordinary skill in the art will readily recognize that there could be variations to the embodiments. The reader should be aware that the specific discussion may not explicitly describe all embodiments possible; many alternatives are implicit. For instance, although various exemplary embodiments described herein refer to peak fitting with curves of Gaussian, exponentially-modified Gaussian and Gamma distribution line shapes and with pairs of Gaussian curves, any suitable form of line shape may be employed, depending on the particular needs of the artisan or on particular data formats or types of experiments employed. One of ordinary skill in the art would readily understand, from the discussions provided herein, how to employ the methods of the invention to fit various peak shapes using any suitable line shape. One of ordinary skill in the art would also readily understand how to modify equations presented in terms of positive and negative skew so as to fit peaks of negative and positive skew, respectively.

**Claims**

1.   A method of automatically identifying and characterizing spectral peaks of a spectrum generated by a chromatography / mass spectrometry apparatus wherein the spectrum includes ion abundance data in terms of the variables of time and mass-to-charge ratio, said method including the steps of (a) receiving a portion of the spectrum generated by the chromatography / mass spectrometry apparatus; (b) automatically subtracting a baseline from the portion of the spectrum so as to generate a baseline-corrected spectrum portion; (c) automatically determining whether at least a first spectral peak occurs in the baseline-corrected spectrum portion; (d) if a first spectral peak occurs in the baseline-corrected spectrum portion, automatically determining location coordinates of the first spectral peak in terms of the time and mass-to-charge-ratio variables; and (e) if the first spectral peak occurs in the baseline-corrected spectrum portion, reporting to a user or recording to electronic data storage location coordinates of the first spectral peak of the spectrum portion, the method **characterized by**:

   if, in step (d), the first spectral peak occurs in the baseline-corrected spectrum portion, then performing the steps of:

      (d1) automatically removing the first spectral peak from the baseline-corrected spectrum portion and automatically determining whether a second spectral peak occurs in the baseline-corrected spectrum portion;

(d2) if the second spectral peak occurs in the baseline-corrected spectrum portion, dividing the baseline-corrected spectrum portion into at least two spectrum sub-portions;

(d3) if the second spectral peak occurs in the baseline-corrected spectrum portion, automatically determining, for each of the spectrum sub-portions, whether at least one spectral peak occurs in the respective sub-portion; and

(d4) if the second spectral peak occurs in the baseline-corrected spectrum portion, automatically determining, for any and all spectrum sub-portions in which at least one spectral peak occurs, location coordinates of said at least one spectral peak in terms of the time and mass-to-charge-ratio variables.

2. A method as recited in claim 1, further **characterized by** the additional step of:

(f) if the first spectral peak occurs in the baseline-corrected spectrum portion, reporting to a user or recording to electronic data storage a width, an intensity or a skew of the first spectral peak of the spectrum portion.

3. A method as recited in claim 1, wherein the dividing operation of step (d2) comprises dividing the baseline-corrected spectrum portion into quadrants.

4. A method as recited in claim 1, further **characterized by** the additional steps of:

(f) receiving another portion of the spectrum, said other spectrum portion generated by the chromatography / mass spectrometry apparatus concurrently with the performing of one or more of the steps (a) through (e); and

(g) performing steps (b) through (e) in conjunction with the other spectrum portion.

5. A method as recited in claim 1, wherein the step (a) of receiving a portion of the spectrum generated by the chromatography/mass spectrometry apparatus comprises:

receiving a mass spectrum over a spectral region defined by a given range of the time variable and a given range of the mass-to-charge-ratio variable; and

dividing the region of the spectrum into sub regions, each sub region defined by a sub-range of the time variable and a sub-range of the mass-to-charge-ratio variable, wherein the portion of the spectrum corresponds to a one of the sub-regions.

6. An analytical apparatus including (a) a chromatograph configured to receive a mixture of substances and to separate the substances; (b) a mass spectrometer configured to receive the separated substances from the chromatograph at respective times, produce a plurality of ion types from each of the substances and separate the ion types produced from each of the substances according to their respective mass-to-charge ratios; (c) a detector configured to receive and detect each of the separated ion types and to generate spectra comprising ion abundance data in terms of the variables of time and mass-to-charge ratio; (d) a programmable processor electrically coupled to the detector and configured to (i) receive a first portion of a spectrum generated by the detector, (ii) automatically subtract a baseline from the first portion of the spectrum so as to generate a baseline-corrected spectrum portion, (iii) automatically determine whether a first spectral peak occurs in the baseline-corrected spectrum portion and (iv) if the first spectral peak occurs in the baseline-corrected spectrum portion, automatically determine location coordinates of the first spectral peak in terms of the time and the mass-to-charge-ratio variables; and (e) either an electronic data storage device or an information output device electrically coupled to the programmable processor configured so as to report or record location coordinates of a spectral peak of the spectrum portion, the apparatus **characterized in that** the programmable processor is further configured to:

(v) if the first spectral peak occurs in the baseline-corrected spectrum portion, automatically remove the first spectral peak from the baseline-corrected spectrum portion and automatically determine whether a second spectral peak occurs in the baseline-corrected spectrum portion;

(vi) if the second spectral peak occur in the baseline-corrected spectrum portion, divide the baseline-corrected spectrum portion into at least two spectrum sub-portions;

(vii) if the second spectral peak occurs in the baseline-corrected spectrum portion, automatically determine, for each of the spectrum sub-portions, whether at least one spectral peak occurs in the respective sub-portion; and

(viii) if the second spectral peak occurs in the baseline-corrected spectrum portion, automatically determine, for any and all spectrum sub-portions in which at least one spectral peak occurs, location coordinates of said at least one spectral peak in terms of the time and mass-to-charge-ratio variables.

7. An apparatus as recited in claim 6, wherein the programmable processor is further configured to record to the electronic data storage device or to output to the information output device a width, an intensity or a skew of the spectral peak of the spectrum portion.

8. An apparatus as recited in claim 6, wherein the programmable processor is further configured to:

(ix) receive another portion of the spectrum, said other portion generated by the detector concurrently with the time that the programmable processor processes data of the first portion of the spectrum; and
(x) process data of the second portion of the spectrum.

9. An apparatus as recited in claim 6, wherein the programmable processor is electrically coupled to at least one of the chromatograph and the mass spectrometer, wherein the programmable processor is further configured to control the operation of at least one of the chromatograph and the mass spectrometer according to information determined from the first spectrum portion.

## Patentansprüche

1. Verfahren zum automatischen Identifizieren und Charakterisieren von Spektralspitzen eines Spektrums, das von einer chromatographischen/massenspektrometrischen Vorrichtung erzeugt wird, wobei das Spektrum Ionenüberschussdaten in Bezug auf die Variablen Zeit und Masse-zu-Ladung-Verhältnis beinhaltet, wobei das Verfahren folgende Schritte beinhaltet: (a) Empfangen eines Abschnitts des von der chromatographischen/massenspektrometrischen Vorrichtung erzeugten Spektrums; (b) automatisches Subtrahieren einer Basislinie von dem Abschnitt des Spektrums, um einen basislinienkorrigierten Spektrumsabschnitt zu erzeugen; (c) automatisches Bestimmen, ob zumindest eine erste Spektralspitze in dem basislinienkorrigierten Spektrumsabschnitt auftritt; (d) wenn eine erste Spektralspitze in dem basislinienkorrigierten Spektrumsabschnitt auftritt, automatisches Bestimmen von Ortskoordinaten der ersten Spektralspitze in Bezug auf die Variablen Zeit und Masse-zu-Ladung-Verhältnis; und (e) Melden von Ortskoordinaten der ersten Spektralspitze des Spektrumsabschnitts an einen Anwender oder Aufzeichnen derselben an einem elektronischen Datenspeicherort, falls die erste Spektralspitze im basislinienkorrigierten Spektrumsabschnitt auftritt, wobei das Verfahren **dadurch gekennzeichnet ist dass**:

dann, wenn in Schritt (d) die erste Spektralspitze im basislinienkorrigierten Spektrumsabschnitt auftritt, die folgenden Schritte durchgeführt werden:

(d1) automatisches Entfernen der ersten Spektralspitze vom basislinienkorrigierten Spektrumsabschnitt und automatisches Bestimmen, ob eine zweite Spektralspitze im basislinienkorrigierten Spektrumsabschnitt auftritt;
(d2) wenn die zweite Spektralspitze im basislinienkorrigierten Spektrumsabschnitt auftritt, Teilen des basislinienkorrigierten Spektrumsabschnitts in mindestens zwei Spektrumsteilabschnitte;
(d3) automatisches Bestimmen für jeden der Spektrumsteilabschnitte, ob mindestens eine Spektralspitze im jeweiligen Teilabschnitt auftritt, falls die zweite Spektralspitze im basislinienkorrigierten Spektrumsabschnitt auftritt; und
(d4) für jeden einzelnen von den Spektrumsteilabschnitten, in denen mindestens eine Spektralspitze auftritt, automatisches Bestimmen von Ortskoordinaten der mindestens einen Spektralspitze in Bezug auf die Variablen Zeit und Masse-zu-Ladung-Verhältnis, falls die zweite Spektralspitze im basislinienkorrigierten Spektrumsabschnitt auftritt.

2. Verfahren nach Anspruch 1, ferner **gekennzeichnet durch** den zusätzlichen Schritt des:

(f) Meldens einer Breite, einer Intensität oder eines Versatzes der ersten Spektralspitze des Spektrumsabschnitts an einen Anwender oder Aufzeichnens derselben in einem elektronischen Datenspeicher, falls die erste Spektralspitze im basislinienkorrigierten Spektrumsabschnitt auftritt.

3. Verfahren nach Anspruch 1, wobei die Teilungsoperation von Schritt (d2) das Teilen des basislinienkorrigierten Spektrumsabschnitts in Quadranten umfasst.

4. Verfahren nach Anspruch 1, ferner **gekennzeichnet durch** die folgenden Schritte:

(f) Empfangen eines anderen Abschnitts des Spektrums, wobei der andere Spektrumsabschnitt von der chromatographischen/massenspektrometrischen Vorrichtung gleichzeitig mit der Durchführung von einem oder mehreren der Schritte (a) bis (e) erzeugt wird; und

(g) Durchführen der Schritte (b) bis (e) im Zusammenhang mit dem anderen Spektrumsabschnitt.

5. Verfahren nach Anspruch 1, wobei der Schritt (a), in dem ein Abschnitt des von der chromatographischen/massenspektrometrischen Vorrichtung erzeugten Spektrums empfangen wird, umfasst:

Empfangen eines Massenspektrums über einer Spektralregion, die durch einen bestimmten Bereich der Variablen Zeit und einen bestimmten Bereich der Variablen Masse-zu-Ladung-Verhältnis definiert wird; und Teilen der Region des Spektrums in Teilregionen, wobei jede Teilregion durch einen Teilbereich der Variablen Zeit und einen Teilbereich der Variablen Masse-zu-Ladung-Verhältnis definiert wird, wobei der Abschnitt des Spektrums einer der Teilregionen entspricht.

6. Analysevorrichtung, aufweisend: (a) einen Chromatographen, der dafür ausgelegt ist, eine Mischung von Substanzen zu empfangen und die Substanzen voneinander zu trennen; (b) ein Massenspektrometer, das dafür ausgelegt ist, die voneinander getrennten Substanzen zu jeweiligen Zeiten vom Chromatographen zu empfangen, mehrere Ionentypen aus den einzelnen Substanzen herzustellen und die aus den einzelnen Substanzen hergestellten Ionentypen gemäß ihren jeweiligen Masse-zu-Ladungs-Verhältnissen voneinander zu trennen; (c) einen Detektor, der dafür ausgelegt ist, jeden der voneinander getrennten Ionentypen zu empfangen und zu detektieren und Spektren zu erzeugen, die Ionenüberschussdaten in Bezug auf die Variablen Zeit und Masse-zu-Ladung-Verhältnis umfassen; (d) einen programmierbaren Prozessor, der elektrisch mit dem Detektor gekoppelt ist und dafür ausgelegt ist, (i) einen ersten Abschnitt eines vom Detektor erzeugten Spektrums zu empfangen, (ii) automatisch eine Basislinie von dem ersten Abschnitt des Spektrums zu subtrahieren, um einen basislinienkorrigierten Spektrumsabschnitt zu erzeugen, (iii) automatisch zu bestimmen, ob eine erste Spektralspitze im basislinienkorrigierten Spektrumsabschnitt auftritt, und (iv) automatisch Ortskoordinaten der ersten Spektralspitze in Bezug auf die Variablen Zeit und Masse-zu-Ladung-Verhältnis zu bestimmen, falls die erste Spektralspitze im basislinienkorrigierten Spektrumsabschnitt auftritt; und (e) entweder eine elektronische Datenspeichervorrichtung oder eine Informationsausgabevorrichtung, die mit dem programmierbaren Prozessor gekoppelt ist und die dafür ausgelegt ist, Ortskoordinaten einer Spektralspitze des Spektrumsabschnitts zu melden oder aufzuzeichnen, wobei die Vorrichtung **dadurch gekennzeichnet ist, dass** der programmierbare Prozessor ferner dafür ausgelegt ist:

(v) wenn die erste Spektralspitze im basislinienkorrigierten Spektrumsabschnitt auftritt, die erste Spektralspitze automatisch vom basislinienkorrigierten Spektrumsabschnitt zu entfernen und automatisch zu bestimmen, ob eine zweite Spektralspitze im basislinienkorrigierten Spektrumsabschnitt auftritt;

(vi) den basislinienkorrigierten Spektrumsabschnitt in mindestens zwei Spektrumsteilabschnitte zu teilen, falls die zweite Spektralspitze im basislinienkorrigierten Spektrumsabschnitt auftritt;

(vii) wenn die zweite Spektralspitze im basislinienkorrigierten Spektrumsabschnitt auftritt, für jeden der Spektrumsteilabschnitte automatisch zu bestimmen, ob mindestens eine Spektralspitze im jeweiligen Teilabschnitt auftritt; und

(viii) wenn die zweite Spektralspitze im basislinienkorrigierten Spektrumsabschnitt auftritt, für jeden einzelnen von den Spektrumsteilabschnitten, in denen mindestens eine Spektralspitze auftritt, automatisch Ortskoordinaten der mindestens einen Spektralspitze in Bezug auf die Variablen Zeit und Masse-zu-Ladung-Verhältnis zu bestimmen.

7. Vorrichtung nach Anspruch 6, wobei der programmierbare Prozessor ferner dafür ausgelegt ist, eine Breite, eine Intensität oder einen Versatz der Spektralspitze des Spektrumsabschnitts in der elektronischen Datenspeichervorrichtung aufzuzeichnen oder an die Informationsausgabevorrichtung auszugeben.

8. Vorrichtung nach Anspruch 6, wobei der programmierbare Prozessor ferner dafür ausgelegt ist:

(ix) einen anderen Abschnitt des Spektrums zu empfangen, wobei der andere Abschnitt vom Detektor zur gleichen Zeit empfangen wird, zu der der programmierbare Prozessor Daten des ersten Abschnitts des Spektrums verarbeitet; und

(x) Daten des zweiten Abschnitts des Spektrums zu verarbeiten.

9. Vorrichtung nach Anspruch 6, wobei der programmierbare Prozessor elektrisch mit dem Chromatographen und/oder dem Massenspektrometer gekoppelt ist, wobei der programmierbare Prozessor ferner dafür ausgelegt ist, den

**EP 2 438 436 B1**

Betrieb des Chromatographen und/oder des Massenspektrometers gemäß Informationen zu steuern, die aus dem ersten Spektrumsabschnitt bestimmt worden sind.

**Revendications**

1. Procédé d'identification et de caractérisation automatique de pics spectraux d'un spectre généré par un appareil de chromatographie/spectrométrie de masse, le spectre comprenant des données d'abondance d'ions en fonction des variables de temps et de rapport masse-charge, ledit procédé comprenant les étapes de (a) réception d'une partie du spectre généré par l'appareil de chromatographie/spectrométrie de masse ; (b) soustraction automatique d'une ligne de référence de la partie du spectre afin de générer une partie de spectre corrigée de la ligne de référence ; (c) détermination automatique qu'au moins un premier pic spectral apparaît ou non dans la partie de spectre corrigée de la ligne de référence ; (d) si un premier pic spectral apparaît dans la partie de spectre corrigée par ligne de référence, détermination automatique de coordonnées de localisation du premier pic spectral en fonction des variables de temps et de rapport masse-charge ; et (e) si le premier pic spectral apparaît dans la partie de spectre corrigée de la ligne de référence, signalisation à un utilisateur ou enregistrement sur un stockage de données électronique de coordonnées de localisation du premier pic spectral de la partie de spectre, le procédé étant **caractérisé par** :

   si, à l'étape (d), le premier pic spectral apparaît dans la partie de spectre corrigée de la ligne de référence, la réalisation ensuite des étapes de :

   (d1) suppression automatique du premier pic spectral de la partie de spectre corrigée de la ligne de référence et de détermination automatique qu'un second pic spectral apparaît ou non dans la partie de spectre corrigée de la ligne de référence ;
   (d2) si le second pic spectral apparaît dans la partie de spectre corrigée de la ligne de référence, division de la partie de spectre corrigée de la ligne de référence en au moins deux sous-parties de spectre ;
   (d3) si le second pic spectral apparaît dans la partie de spectre corrigée de la ligne de référence, détermination automatique, pour chacune des sous-parties de spectre, qu'au moins un pic spectral apparaît ou non dans la sous-partie respective ; et
   (d4) si le second pic spectral apparaît dans la partie de spectre corrigée de la ligne de référence, détermination automatique, pour toutes les sous-parties de spectre dans lesquelles au moins un pic spectral apparaît, de coordonnées de localisation dudit au moins un pic spectral en fonction des variables de temps et de rapport masse-charge.

2. Procédé selon la revendication 1, **caractérisé en outre par** l'étape supplémentaire de :

   (f) si le premier pic spectral apparaît dans la partie de spectre corrigée de la ligne de référence, signalisation à un utilisateur ou enregistrement sur un stockage de données électronique d'une largeur, d'une intensité ou d'une inclinaison du premier pic spectral de la partie de spectre.

3. Procédé selon la revendication 1, dans lequel l'opération de division de l'étape (d2) comprend la division de la partie de spectre corrigée de la ligne de référence en quadrants.

4. Procédé selon la revendication 1, **caractérisé en outre par** les étapes supplémentaires de :

   (f) réception d'une autre partie du spectre, ladite autre partie de spectre générée par l'appareil de chromatographie/spectrométrie de masse simultanément avec la réalisation d'une ou de plusieurs des étapes (a) à (e) ; et
   (g) réalisation des étapes (b) à (e) conjointement avec l'autre partie de spectre.

5. Procédé selon la revendication 1, dans lequel l'étape (a) de réception d'une partie du spectre générée par l'appareil de chromatographie/spectrométrie de masse comprend :

   la réception d'un spectre de masse sur une région spectrale définie par une gamme donnée de la variable de temps et une gamme donnée de la variable de rapport masse-charge ; et
   la division de la région du spectre en sous-régions, chaque sous-région étant définie par une sous-gamme de la variable de temps et une sous-gamme de la variable de rapport masse-charge, la partie du spectre correspondant à l'une des sous-régions.

6. Appareil analytique comprenant (a) un chromatographe conçu pour recevoir un mélange de substances et pour séparer les substances ; (b) un spectromètre de masse conçu pour recevoir les substances séparées du chromatographe à des moments respectifs, produire une pluralité de types d'ions à partir de chacune des substances et séparer les types d'ions produits à partir de chacune des substances selon leurs rapports masse-charge respectifs ; (c) un détecteur conçu pour recevoir et détecter chacun des types d'ions séparés et pour générer des spectres comprenant des données d'abondance d'ions en fonction des variables de temps et de rapport masse-charge ; (d) un processeur programmable couplé électriquement au détecteur et conçu pour (i) recevoir une première partie d'un spectre généré par le détecteur, (ii) soustraire automatiquement une ligne de référence de la première partie du spectre afin de générer une partie de spectre corrigée de la ligne de référence, (iii) déterminer automatiquement si un premier pic spectral apparaît dans la partie de spectre corrigée de la ligne de référence et (iv) si le premier pic spectral apparaît dans la partie de spectre corrigée de la ligne de référence, déterminer automatiquement des coordonnées de localisation du premier pic spectral en fonction des variables de temps et de rapport masse-charge ; et (e) soit un dispositif de stockage de données électronique, soit un dispositif de sortie d'informations couplé électriquement au processeur programmable conçu afin de signaler ou d'enregistrer des coordonnées de localisation d'un pic spectral de la partie de spectre, l'appareil étant **caractérisé en ce que** le processeur programmable est en outre conçu pour :

(v) si le premier pic spectral apparaît dans la partie de spectre corrigée de la ligne de référence, supprimer automatiquement le premier pic spectral de la partie de spectre corrigée de la ligne de référence et déterminer automatiquement si un second pic spectral apparaît dans la partie de spectre corrigée de la ligne de référence ;
(vi) si le second pic spectral apparaît dans la partie de spectre corrigée de la ligne de référence, diviser la partie de spectre corrigée de la ligne de référence en au moins deux sous-parties de spectre ;
(vii) si le second pic spectral apparaît dans la partie de spectre corrigée de la ligne de référence, déterminer automatiquement, pour chacune des sous-parties de spectre, si au moins un pic spectral apparaît dans la sous-partie respective ; et
(viii) si le second pic spectral apparaît dans la partie de spectre corrigée de la ligne de référence, déterminer automatiquement, pour toutes les sous-parties de spectre dans lesquelles au moins un pic spectral apparaît, des coordonnées de localisation dudit au moins un pic spectral en fonction des variables de temps et de rapport masse-charge.

7. Appareil selon la revendication 6, dans lequel le processeur programmable est en outre conçu pour enregistrer sur le dispositif de stockage de données électronique ou pour délivrer au dispositif de sortie d'informations une largeur, une intensité ou une inclinaison du pic spectral de la partie de spectre.

8. Appareil selon la revendication 6, dans lequel le processeur programmable est en outre conçu pour :

(ix) recevoir une autre partie du spectre, ladite autre partie étant générée par le détecteur en même temps que le processeur programmable traite des données de la première partie du spectre ; et
(x) traiter des données de la seconde partie du spectre.

9. Appareil selon la revendication 6, dans lequel le processeur programmable est couplé électriquement à au moins l'un parmi le chromatographe et le spectromètre de masse, et dans lequel le processeur programmable est en outre conçu pour commander le fonctionnement d'au moins l'un parmi le chromatographe et le spectromètre de masse selon des informations déterminées à partir de la première partie de spectre.

<u>100</u>

```
                    ┌──────────────────────────┐  110
                    │                          │╱
                    │   Receive input spectrum │
                    │                          │
                    └──────────────────────────┘
                                 │
                                 ▼
                    ┌──────────────────────────┐  120
                    │                          │╱
                    │    Remove baseline;      │
                    │    estimate noise        │
                    └──────────────────────────┘
                                 │
                                 ▼
                    ┌──────────────────────────┐  150
                    │                          │╱
                    │    Determine peaks       │
                    │                          │
                    └──────────────────────────┘
                                 │
                                 ▼
                    ┌──────────────────────────┐  170
                    │                          │╱
                    │  Optimizing overlapping peaks │
                    │                          │
                    └──────────────────────────┘
                                 │
                                 ▼
                    ┌──────────────────────────┐  190
                    │                          │╱
                    │    Report information    │
                    │                          │
                    └──────────────────────────┘
```

**FIG. 1**

**120**            Baseline Removal

INITIALIZATION   *122*

Fit polynomial of order *n*; determine SSR(*n*)   *124*

*126*   *n>0 ?*  — Yes →   ΔSSR(*n*) = SSR(*n*)-SSR(*n*-1)   *128*

No

*134*   Increment *n*

*130*   *n≥c ?*  — Yes

No

*132*   Check prior ΔSSR(*n*) values  — No / Yes

*136*   Subtract best-fit polynomial

*142*   Locate most intense point

*138*   Fit end regions   →   *140*   Subtract fit exponential functions

**FIG. 2**

**FIG. 3**

**FIG. 4**

FIG. 5

$$S=(x_R-x_m)/(x_m-x_L)$$

**FIG. 6**

FIG. 7A

FIG. 7B

Gamma or EMG line shape

<u>512</u>

```
┌───────────────┐
│  From Step    │
│    510        │
└───────────────┘
        │
        ▼
                                            808
┌────────────────────────────────┐
│                                │
│   Fit usimg Eq. 2; Calculate chi-
│         squared                │
│                                │
└────────────────────────────────┘
        │
  810   │
        ▼
┌────────────────────────────────┐
│                                │
│   Fit using Eq. 3a; Calculate chi-
│         squared                │
│                                │
└────────────────────────────────┘
        │
        │                           812
        ▼
┌────────────────────────────────┐
│                                │
│      Choose fit function       │
│                                │
└────────────────────────────────┘
        │
        ▼
┌────────────────────────────────┐
│                                │
│      Exit To Step 516          │
│                                │
└────────────────────────────────┘
```

# FIG. 8

508a

| From Step 506 | ⇢ | Vertex ($x_m, y_m$) at maximum intensity | | To Step 509 |

902

904

Find ($x_L, y_m/2$) and ($x_R, y_m/2$) half maxima points;
Set $S = (x_R - x_m)/(x_m - x_L)$

**FIG. 9A**

508b

| From Step 506 | ⇢ | Fit parabola to three data points | | To Step 509 |

906

908

Find ($x_L, y_m/2$) and ($x_R, y_m/2$) half maxima points;
Set $S = (x_R - x_m)/(x_m - x_L)$

**FIG. 9B**

FIG. 10

**FIG. 11A**

**FIG. 11B**

**FIG. 11C**

**FIG. 11D**

FIG. 12

**FIG. 13A**

**FIG. 13B**

**FIG. 13C**

<u>1100</u>

```
                                         ┌1102
   ┌──────────────────────────────────┐
   │      Receive spectrum portion     │
   └──────────────────────────────────┘
```

1104

```
   ┌──────────────────────────────────┐
   │    Automatically subtract baseline │
   └──────────────────────────────────┘
```

1103

```
   ┌ ─ ─ ─ ─ ─ ─ ─ ─ ─ ─ ─ ─ ─ ─ ┐
     OPTIONAL: generate
     another portion
     concurrently
   └ ─ ─ ─ ─ ─ ─ ─ ─ ─ ─ ─ ─ ─ ─ ┘
```

1106

```
   ┌──────────────────────────────────┐
   │  Automatically determine presence │
   │   and location of at least peak   │
   └──────────────────────────────────┘
```

1110

```
   ┌──────────────────────────────────┐
   │     Report or record information  │
   └──────────────────────────────────┘
```

1112

```
   ┌ ─ ─ ─ ─ ─ ─ ─ ─ ─ ─ ─ ─ ─ ─ ┐
     OPTIONAL: Receive other
     spectrum portion
   └ ─ ─ ─ ─ ─ ─ ─ ─ ─ ─ ─ ─ ─ ─ ┘
```

## FIG. 14

<u>1150</u>

1152 — START

1154 — Divide spectrum into sub-regions

1156 — Determine if a first peak occurs within each respective sub-region

1158 — Fit first peak, if one occurs

1160 — Record location-coordinates

1162 — Subtract synthetic peak curve(s)

1164 — If first peak in sub-region, determine if a second peak occurs

1166 — Remaining regions = only sub-regions having a second peak

1168 — More regions?

No → 1170 — Return number of peaks and/or location(s)

Yes

**FIG. 15**

<u>1200</u>

1202

START:

Divide spectrum into sub-regions parallel to an axis — 1204

Sum data of each sub-region — 1206

Determine if a first peak occurs within each sub-region — 1207

If first peak occurs, fit all peaks of summed data of sub-region — 1209

Compare peak parameters between pairs of sub-regions — 1211

If conditions met, set location coordinates — 1214

Set remaining regions — 1216

More regions? — 1218

No → Return / End — 1220

Yes

**FIG. 16**

1300

**FIG. 17**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Surface analysis of peptide mass spectra to improve time and mass localization. **CARRILLO et al.** ANNUAL INTERNATIONAL CONFERENCE OF THE IEEE ENGINEERING IN MEDICINE AND BIOLOGY - PROCEEDINGS - CONFERENCE PROCEEDINGS - 26th Annual International Conference of the IEEE Engineering in Medicine and Biology Society, EMBC 2004. Institute of Electrical and Electronic Engineers, 2004, vol. 26, 220-223